# EUROPEAN PATENT SPECIFICATION

(11) **EP 1 664 261 B1**
(45) Date of publication and mention of the grant of the patent: **11.08.2010**
(21) Application number: 04738952.3
(22) Date of filing: 25.06.2004
(51) Int. Cl.: C12G 1/02, C12H 1/00, C12N 1/20

(54) **INITIATION OF FERMENTATION**
STARTEN EINER FERMENTATION
INITIATION DE FERMENTATION

(30) Priority: 26.06.2003 DK 200300977; 30.06.2003 US 483139 P
(43) Date of publication of application: 07.06.2006
(60) Divisional application: 10164726.1
(73) Proprietor: Chr. Hansen A/S, 2970 Horsholm (DK)
(72) Inventor: NIELSEN, Jan, Clair, DK-3390 Hundested (DK)
(86) International application number: PCT/DK2004/000455
(87) International publication number: WO 2004/113488

(56) References cited:
- EP-A- 0 327 380
- US-A- 4 562 077
- US-A- 5 077 060
- US-A- 5 460 837
- US-A- 5 607 854
- US-B1- 6 284 518
- NIELSEN JAN CLAIR ET AL: "Malolactic fermentation in wine by direct inoculation with freeze-dried Leuconostoc oenos cultures" AMERICAN JOURNAL OF ENOLOGY AND VITICULTURE, vol. 47, no. 1, 1996, pages 42-48, XP009023863 ISSN: 0002-9254
- NIELSEN J C ET AL: "Control of flavor development in wine during and after malolactic fermentation by Oenococcus oeni." APPLIED AND ENVIRONMENTAL MICROBIOLOGY 65 (2) 740-745 1999 RESEARCH & DEV., CHR. HANSEN A/S, DK-2970 HORSHOLM, DENMARK. TEL. 45 45747474. FAX 45 45748994. E-MAIL JCN.DK(A)CHR-HANSEN.COM, February 1999 (1999-02), XP002266818
- VILJAKAINEN S K ET AL: "The use of malolactic Oenococcus oeni (ATCC 39401) for deacidification of media containing glucose, malic acid and citric acid" EUROPEAN FOOD RESEARCH AND TECHNOLOGY, SPRINGER VERLAG, HEIDELBERG, DE, vol. 211, no. 6, 2000, pages 438-442, XP002266819 ISSN: 1438-2377
- CARRIE C ET AL: "COMPARISON OF COMMERICAL PREPARATIONS OF LACTIC ACID BACTERIA FOR DIRECT INOCULATION, FOR CONTROL OF MALOLACTIC FERMENTATION OF MERLOT WINES COMPARISON DE PREPARATIONS COMMERCIALES DE BACTERIES LACTIQUES A ENSEMENCEMENT DIRECT, EN VUE DE GERER LA FERMENTATION MALOLACTIQUE DU MERLOT" REVUE DES OENOLOGUES ET DES TECHNIQUES VITIVINICOLES ET OENOLOGIQUES, UNION NATIONALE DES OENOLOGUES FRANCE BOURGOGNE-PUBLICATIONS,, FR, no. 103, 2002, pages 16-18, XP009023946 ISSN: 0760-9868
- REGUANT C ET AL: "Influence of phenolic compounds on the physiology of Oenococcus oeni from wine." JOURNAL OF APPLIED MICROBIOLOGY 88 (6) 1065-1071 2000 CORRESPONDENCE (REPRINT) ADDRESS, A. BORDONS, DEP. DE BIOQUIMICA I BIOTEC., UNIV. ROVIRA I VIRGILI, E-43005 TARRAGONA, CATALONIA, SPAIN. E-MAIL ABPD(A)ASTOR.URV.ES, 2000, XP001157128
- KRIEGER S A: "THE USE OF ACTIVE DRY MALOLACTIC STARTER CULTURES" AUSTRALIAN AND NEW ZEALAND WINE INDUSTRY JOURNAL, AUSTRALIAN INDUSTRIAL PUBLISHERS, ADELAIDE, AU, vol. 8, no. 1, February 1993 (1993-02), pages 56-62, XP009023867 ISSN: 0819-2421
- JOYEUX A ET AL: "COMPARAISON DE DIVERSES PREPARATIONS INDUSTRIELLES DE BACTERIES LACTIQUES REACTIVEES POUR STIMULER LA FERMENTATION MALOLACTIQUE COMPARISON OF VARIOUS REACTIVATED INDUSTRIAL PREPARATIONS OF LACTIC ACID BACTERIA FOR STIMULATION OF MALOLACTIC FERMENTATION" CONNAISSANCE DE LA VIGNE ET DU VIN, VIGNE ET VIN PUBLICATIONS INTERNATIONALES, BORDEAUX, FR, vol. 19, no. 3, 1985, pages 149-159, XP009023986 ISSN: 0010-597X
- BELITZ, H.-D. AND GROSCH, W.: "Lehrbuch der Lebensmittelchemie" 1992, SPRINGER , XP002326417 page 767; table 18.35
- PILATTE E ET AL: "Development of a specific activator for malolactic bacteria." REVUE DES OENOLOGUES ET DES TECHNIQUES VITIVINICOLES ET OENOLOGIQUES, 1999, XP009046219 CHR. HANSEN FRANCE, 91 ARPAJON, F

## Description

### Field of invention

The present invention relates to methods and compositions for initiation of as well as to methods of fermentation in a liquid composition comprising a fermentable compound. In particular the invention relates to methods and compositions for initiation of malo-lactic fermentation during wine production.

### Background of invention

Wine contain L-malic acid in the range of 1 to 10 g/L. The amount of malic acid depends largely on the climatic conditions. Hence, wines produced in colder areas tend to have a relative higher concentration. From a taste and flavour point of view, malic acid is considered undesirable in most red wines and in several types of white wines and sparkling wines and from a practically/economically point of view malic acid is undesirable as it can support growth of bacteria in the wine after it has been bottled.

During the alcoholic fermentation only a small part of the present malic acid is degraded by the yeast. However, the content of malic acid in a wine may be effectively reduced by the so-called malolactic fermentation (MLF) which normally occurs after completion of the alcoholic fermentation. The MLF results from the catabolic activity of various lactic acid bacteria, including species belonging to the genera of *Lactobaccilus*, *Pediococcus* and *Oenococcus.*

The bacteria may be present in the wine as part of the indigenous microbial flora, or they may have been added as a bacterial starter culture. The most preferable bacteria species by winemakers is *Oenococcus oeni*, formerly known as *Leuconostoc oenos.* The catabolic phase is usually entered when the malolactically active bacteria during the growth phase has reached a population density of about 10⁶ colony forming units (CFU) per ml in the wine. During the MLF the bacteria degrade the malic acid, a dicarboxylic acid, to lactic acid, a monocarboxylic acid. As a result of this the acidity of the wine decreases and the pH increases, resulting in a wine with softer palate. Within the field the malolactic fermentation is considered completed when the concentration of malic acid in the wine is less than 30 mg/l (Zoecklein et al., in Wine Analysis and Production, Chapman and Hall, p 296).

However, during the malolactic fermentation *Oenococcus oeni* also degrade the citric acid, which normally is present in the wine at a concentration of 0.3-0.9 g/L. The catabolism of malic acid and citric acid is in general not concomitant, but sequential, i.e. the citric acid degradation is delayed compared to the malic acid fermentation (see for example Nielsen et al., 1999, Appl. Environ. Microbiol., 65:740-745 and Viljakainen and Laakso, 2000, Eur.Food Res.Technol., 211:438-442). The degree of delay is dependent on the specific bacteria and the wine. The degradation of citric acid is often undesired as the wine looses some of its fruitiness which is appreciated in most wines. Another undesired and unavoidable effect of the citric acid degradation by *Oenococcus oeni* during MLF is the production of acetic acid, which is one of the end products from the citric acid degradation. The acetic acid concentration in the wine may increase with 0.1-0.3 g/L during the MLF. Acetic acid is highly undesired as it gives the wine an unpleasant vinegar flavour at higher concentration and the winemaker use much attention to keep the acetic acid concentration in the wine as low as possible during the different winemaking steps. Besides the lactic acid bacteria the other sources of acetic acid in winemaking is yeast and acetic acid bacteria. An important intermediary compound in the metabolism of citric acid by *Oenococcus oeni* is diacetyl. When present at concentration above the sensory threshold, diacetyl gives the wine a buttery aroma which is undesired in most red wines. However, in some white wines, e.g. Chardonnay the aroma may be appreciated.

Because the winemaker often prefer to exercise a greater degree of control over the malolactic fermentation process it has become increasingly common practice in the wine industry to induce the fermentation by use of commercially available concentrated frozen or freeze dried starter cultures of *Oenococcus oeni,* which are inoculated directly into the wine without any prior re-hydration and activation steps. The usefulness of a concentrated frozen or freeze dried culture which are inoculated direct into wine depends very much on the survival rate of the bacteria culture after the inoculation. The transition of the bacteria from a friendly propagation medium with high pH and high nutrition level to the hostile condition in wine with high ethanol concentration, low pH, low nutrition level, and presence of SO₂ is very stressful for the bacteria and may result in survival rates below 1% in the inoculated wine.

Typically, the described propagation medium for lactic acid bacteria, including Oe*nococcus oeni,* contain various nutrients such as vitamins, minerals, yeast extract and sugars. The amount of sugars in the media are normally within 20-50 g/L as higher concentrations of sugars are considered to strongly reduce or inhibit the growth of lactic acid bacteria. In the prior art higher concentrations of sugars in the propagation medium have therefore been considered to be of no practically use or economically interest.

Freeze dried cultures of a strain of *Oenococcus oeni,* which do not ferment the citric acid in the wine during the malolactic fermentation, are commercially available. There are several advantages in using this strain for malolactic fermentation in wine. The fruitiness of the wine is conserved, there is no production of acetic acid during the malolactic fermentation and there is no production of the buttery flavour, diacetyl. However, the commercial cultures of this strain on the market can not be used for direct inoculation into wine as this results in a survival rate which is of no practical use. According to the commercial application manuals of the products the freeze dried cultures needs re-hydration and an adaptation procedure involving several steps before the bacteria can be inoculated into wine. The first step may involve dissolving the freeze dried product in 5 L of half water, half grape juice or wine added different nutrition. After 5-7 days incubation the pre-culture is diluted with 20-200 L wine which is incubated for another 2-12 days before the final inoculation into the production tank with wine. The adaptation steps are very time and labour consuming for the winemaker as he has to follow the adaptation steps carefully, and there is a high risk for contamination with spoilage bacteria and yeast as the adaptation steps under the practical conditions in the wineries can not be conducted under sterile conditions.

WO 9320180 discloses a method for inducing malolactic fermentation in wine or fruit juice by the direct inoculation of a concentrate of a starter culture containing a selected malolactically active bacteria strain having a survival rate of at least 80 % when introduced into a wine having a pH of 3.2 or lower and containing at least 25 mg SO₂ per L and at least 12 vol % ethanol, and capable of starting malolactic fermentation when added directly to the wine or fruit juice at a concentration of less than 10⁷ colony forming units per ml. Said bacteria strain is also capable of degrading citric acid. The document clearly indicates that the bacteria strains ability to survive the direct inoculation into wine is linked to the genetic of the strain selected. According to the disclosure the selected bacteria strains are propagated according to processes which are well-known in the art.

US 6,284,518 B1 discloses a media for propagation of different lactic acid bacteria species, including *Oenococcus oeni*. According to the disclosure a key feature of the invention is the use of a fructose/glucose mixture where fructose is the primary carbohydrate source. Fructose/glucose mixtures containing between 3% to about 45% glucose can be employed, preferably the amount is between 5% and about 40% glucose. Most preferable, the amount is less then 20% of the mixture. In the disclosed media, as biomass growth occurs, the pH is allowed to drop. The amount of carbohydrate source in the disclosed medium is between 30 g/L to 60 g/L. They document describes that 10⁶-10⁷ bacteria/ml are inoculated into the medium and the bacteria are then propagated for 6-8 days before the bacteria can be inoculated into wine.

In US 4,562,077 is disclosed a method for the reduction of malic acid to lactic acid in wine which comprises the inoculation of a culture concentrate into non-sterile fruit juice containing a nitrogen source to provide about 10⁷ to 10¹⁰ bacteria per ml. After this activation step the mixture of fruit juice and bacteria are introduced into wine or grape must to produce wine having a reduced malic acid content. The activation conditions disclosed are an activation period of 48 to 72 hours at 18°C to 25°C.

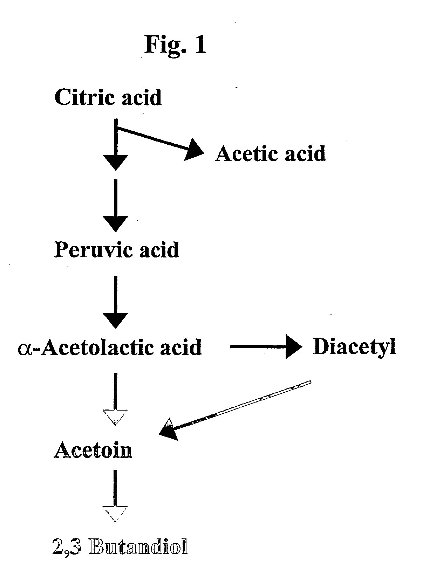

Carrié et al., 2002, Revue des oenologues 103: 16-18 describes various malic acid fermenting bacteria, some of which can be inoculated directly into wine. The document furthermore describes the citric acid concentration in wine after/during malolactic fermentation with these bacteria. It appears from fig. 1 of the document that malolactic fermentation is completed for only one of the strains investigated (strain F). Thus, citric acid concentration is determined prior to or at completion of malolactic fermentation. Because citric acid fermentation is delayed compared to malic acid fermentation (see herein above), citric acid concentration is determined prior to completion of Citric acid degradation. The document is silent regarding whether the bacteria disclosed therein are capable of degrading citric acid. Because lactic acid bacteria normally are capable of degrading citric acid, it must be anticipated that the bacteria disclosed in the document are capable of degrading citric acid.

Nielsen et al., 1996 Am.J.Enol.Vitic. 47:42-48 describes Leuconostoc oenos bacterial cultures capable of fermenting malic acid to lactic acid. The bacteria can be inoculated directly into wine. The bacteria are capable of degrading citric acid.

Nielsen and Richelieu, 1999, Appl.Environ.Microbiol. 65:740-745 describes malolactic fermention and describes that citric acid degradation is delayed compared to degradation of malic acid.

US 5,460,837 describes a method of initiating malolactic fermentation by cultivating malolactically active bacteria in a medium comprising 0.05 to 0.5% glucose, separation of biomass and optionally freeze drying. The freeze dried cultures may be inoculated directly in wine.

### Summary of invention

It is therefore an object of the present invention to provide improved methods of inducing specific fermentation processes in a liquid composition.

Hence, in one aspect the present invention relates to induction of specific fermentation processes in a liquid composition comprising at least one fermentable compound as well as to microbial organisms for use in said methods.

In particular the present invention provides, compared to known methods, a significant improved method of inducing malolactic fermentation in wine or fruit juice without the concomitant degradation of citric acid, production of acetic acid, and production of diacetyl herein within a short period of time by inoculation wine or a fruit juice directly with a concentrated culture composition of malolactically active and non-citric acid fermenting bacteria at an economically feasible concentration and accordingly, to avoid the tediously, risky and costly processes of re-hydration, activation, and adaptation which are currently required with commercial malolactically non-citric acid fermenting starter cultures.

Also, the present invention provides, compared to known methods, a significant improved method of inducing malolactic fermentation in wine or fruit juice within a short period of time by inoculation wine or a fruit juice with a specially activated concentrated culture solution of malolactically active and citric acid or non-citric acid fermenting bacteria at an economically feasible concentration and accordingly, to avoid the lag and dead phase observed when commercial dry malolactic starter cultures are inoculated directly into wine and also to significantly improve the tediously, risky and costly processes of re-hydration, activation, and adaptation which are currently required with commercial malolactic starter cultures not suitable for direct inoculation into wine.

It is therefore a first objective of the present invention to provide isolated and purified microbial organisms, wherein said microbial organisms are capable of fermenting malic acid to lactic acid, and wherein said microbial organism when placed in a medium containing a
predetermined amount of citric acid is only capable of degrading at the most 80% of said citric acid,
and wherein the microbial organism has at least one of the following characteristics, when said microbial organism in a frozen or freeze dried state is added directly into a fermented fruit juice:
i) a survival rate which is at least 1% after two days at 23°C in a fermented sterile fruit juice with a pH of less than 4 and comprising at least 12 vol% ethanol
ii) a survival rate which is at least 70% after two days at 17°C in a fermented sterile fruit juice with a pH of less than 4 comprising at least 13.9 vol% ethanol

Hence, said microbial organism may be added directly into for example a fermented fruit juice during wine production without any previous adaptation. It is in general laborious to adapt bacteria to growth in fermented fruit juice and there is a high risk of contamination using the conventional adaption procedure, in particular in a normal winery where the adaptation frequently cannot be done under sterile conditions.

It is also an objective of the present invention to provide a concentrate comprising or consisting of said microbial organism(s), wherein said concentrate has a content of colony forming units being in the range of 10⁹ to 10¹² per g.

It is a second objective of the present invention to provide methods of preferentially degrading malic acid over citric acid in a liquid composition comprising malic acid and citric acid, said methods comprising the steps of
i) Providing a liquid composition comprising malic acid and citric acid;
ii) Providing a microbial organism capable of fermenting malic acid to lactic acid, wherein said microbial organism when placed in a medium containing a predetermined amount of citric acid is only capable of degrading at the most 80% of said citric acid, and wherein said microbial organism has been frozen or freeze dried,
iii) Adding said freeze dried or frozen microbial organism directly to said liquid composition
iv) incubating said liquid composition and said microbial organism under conditions which allow degradation of at least 70% of the malic acid,
v) thereby obtaining a final liquid composition comprising less than 30% of the initial malic acid and at least 20% of the initial citric acid.

Preferably said microbial organism has at least one of the characteristics outlined herein above.

It is a third objective of the present invention to provide methods of inducing malolactic fermentation during wine production, comprising the steps of
i) Providing a grape juice or a fermented grape juice
ii) Providing a microbial organism capable of fermenting malic acid to lactic acid, wherein said microbial organism when placed in a medium containing a predetermined amount of citric acid is only capable of degrading at the most 80% of said citric acid,
iii) Incubating said grape juice or fermented grape juice with said microbial organism under conditions which allow degradation of malic acid,
iv) thereby inducing malolactic fermentation

Preferably said microbial organism has at least one of the characteristics outlined herein above.

It is another objective of the present invention to provide methods of producing the microbial organism described herein above, wherein said method comprises the steps of
i) Providing a microbial organism resistant to a pH below 5 and an ethanol concentration of at least 8%,
ii) Subjecting said microbial organism to mutagenesis, thereby obtaining more than one different mutated microbial organism
iii) Selecting mutated microbial organisms capable of fermenting malic acid to lactic acid, wherein said microbial organism when placed in a medium containing a predetermined amount of citric acid is only capable of degrading at the most 80% of said citric acid, and wherein the microbial organism has at least one of the following characteristics, when said microbial organism in a frozen or freeze dried state is added directly into a fermented fruit juice:
   a) a survival rate which is at least 1 % after two days at 23°C in a fermented sterile fruit juice comprising at least 12 vol% ethanol;
   b) a survival rate which is at least 70% after two days at 17°C in a fermented sterile fruit juice comprising at least 13.9 vol% ethanol

It is a further objective of the present invention to provide methods of preparing a freeze-dried microbial organism capable of fermenting malic acid to lactic acid, which has reduced citric acid degrading activity and which is capable of survival after direct inoculation into fermented fruit juice, said method comprising the steps of
i) Providing a microbial organism capable of fermenting malic acid to lactic acid, wherein said microbial organism when placed in a medium containing a predetermined amount of citric acid is only capable of degrading at the most 80% of said citric acid,
ii) Providing an adaptation medium comprising at least 6% sugar
iii) Propagating said microbial organism in said adaptation medium under conditions allowing growth of said microbial organism
iv) Harvesting said microbial organism
v) Freeze-drying said microbial organism

### Description of Drawings and Tables

Figure 1. Main pathways for the citric acid metabolism by *Oenococcus oeni*

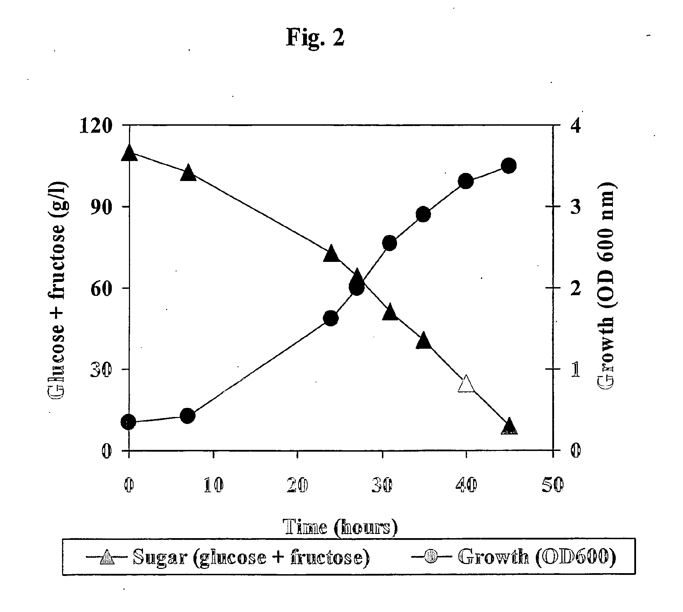

Figure 2. Sugar concentration and growth of the selected non-citric acid fermenting mutant strain *Oenococcu*s *oeni* DSM 15571 in the cultivation and adaptation medium as a function of time. The cultivation was conducted at constant pH 4.5 and 30°C.

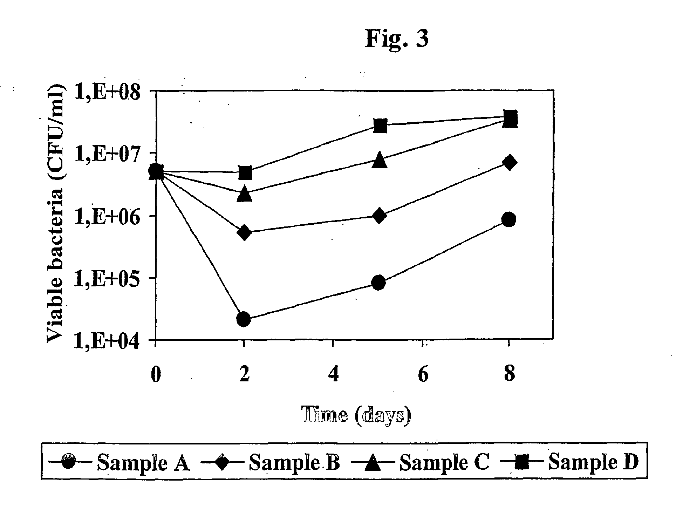

Figure 3. Number of viable bacteria in experimental wine inoculated directly with freeze dried samples of the selected non-citric acid fermenting strain *Oenococcus oeni* DSM 15571 and kept at 23°C. The sample A, B, C, and D were harvested from the cultivation and adaptation medium after 27, 35, 40, and 45 hours respectively (Fig. 2), followed by concentration and freeze drying before inoculation into the experimental wine.

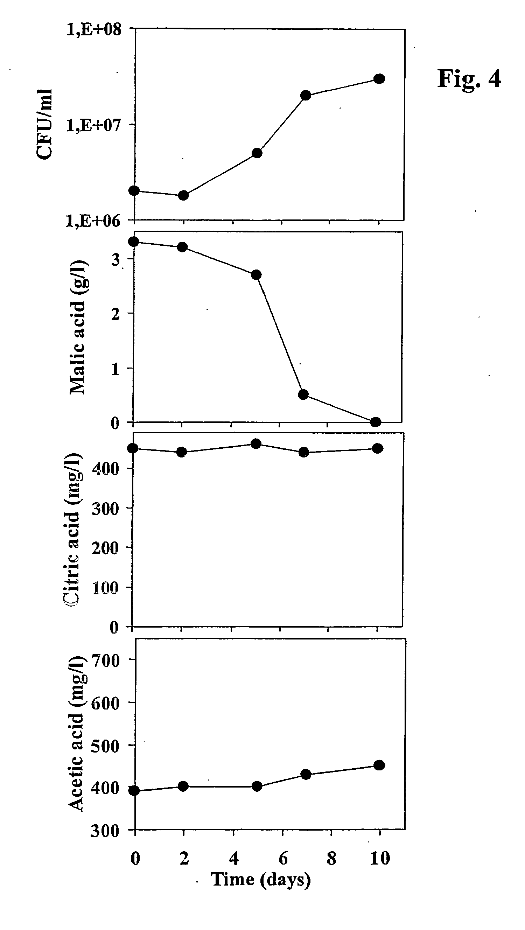

Figure 4. Degradation of malic and citric acid, production of acetic acid, and CFU/ml of active bacteria in experimental wine after direct inoculation with freeze dried composition of the non-citric acid fermenting mutant strain *Oenococcus oeni* DSM 15571. The experiment was conducted at 23°C.

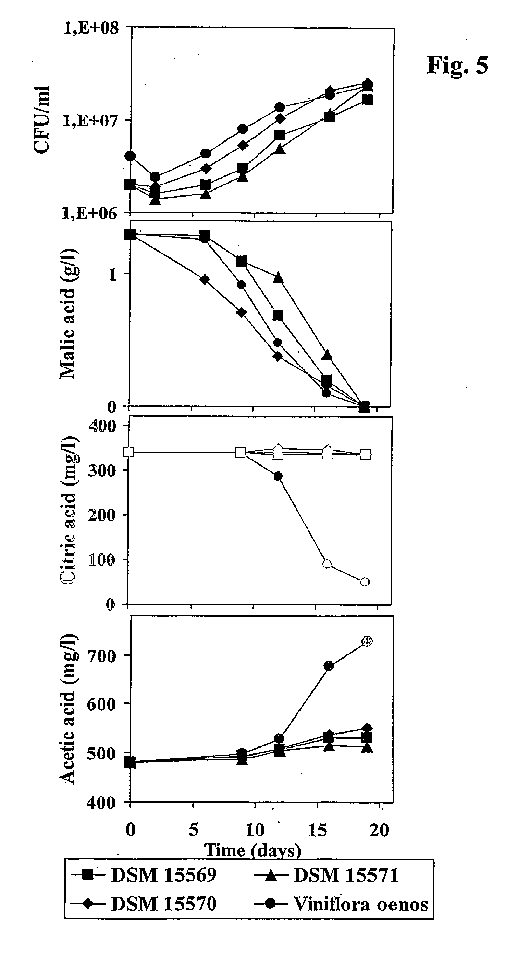

Figure 5. Degradation of malic acid and citric acid, production of acetic acid, and CFU/ml of active bacteria in Pinot Noir wine (13.8 vol% ethanol, pH 3.54, 30 ppm SO₂ added at crush) from Russian River, California, after direct inoculation with freeze dried compositions of the selected non-citric acid fermenting *Oenococcus oeni* strain DSM 15570, strain DSM 15569, and strain DSM 15571. For comparison, the commercial product Viniflora oenos from Chr. Hansen A/S, Denmark, which contain a normal citric acid fermenting *Oenococcus oeni* strain (DSM 7008), was included in the experiment. The experiment was conducted in 250 L oak barrels at 18°C.

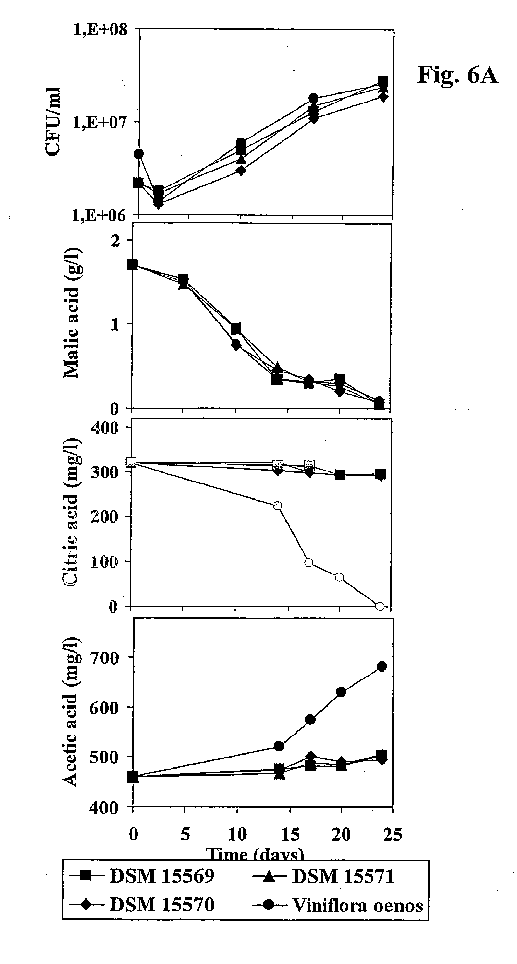

Figure 6A. Degradation of malic acid and citric acid, production of acetic acid, and CFU/ml of active bacteria in Pinot Noir wine (13.9 vol% ethanol, pH 3.57, no SO₂ added at crush) from Sonoma, California, after direct inoculation with freeze dried composition of the non-citric acid fermenting *Oenococcus oeni* strain DSM 15570, strain DSM 15569, and strain DSM 15571. For comparison, the commercial freeze dried product Viniflora oenos from Chr. Hansen A/S, Denmark, which contain a normal citric acid fermenting *Oenococcus oeni* strain (DSM 7008), was included in the experiment. The experiment was conducted in 250 L oak barrels at 17°C.

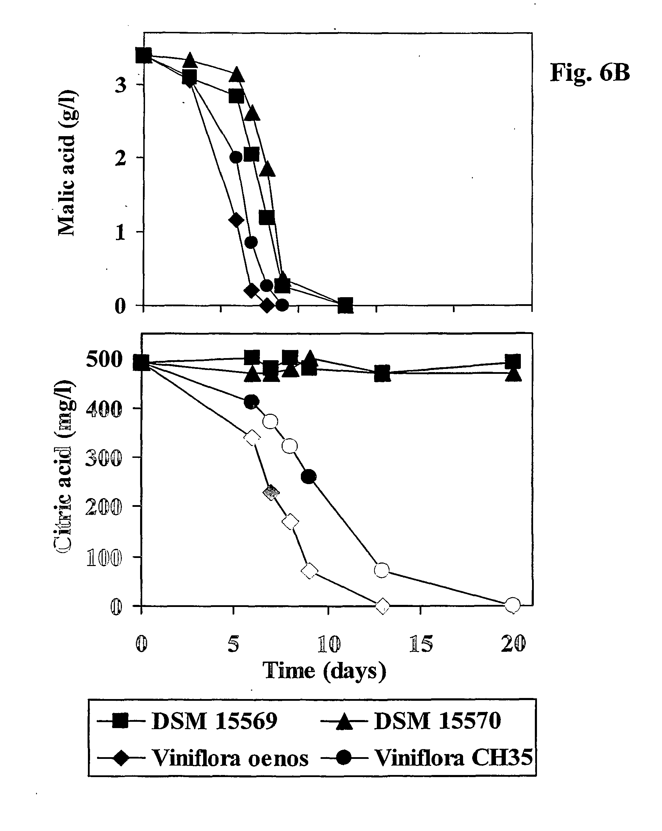

Figure 6B. Degradation of malic and citric acid in experimental wine after direct inoculation with freeze dried composition of the non-ctric acid fermenting mutant strains *Oenococcus oeni* DSM 15569 and DSM 15570. For comparison the commercial freeze dried products Viniflora oenos and Viniflora CH35 from Chr. Hansen A/S, Denmark, which contain normal citric acid fermenting *Oenococcus oeni* strains, were included in the experiment. The experiment was conducted at 23°C.

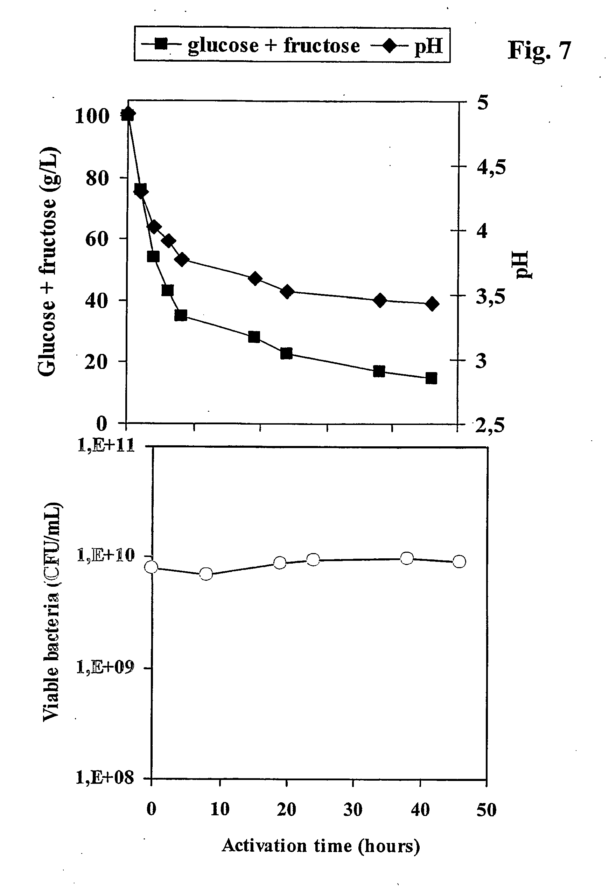

Figure 7. Total glucose + fructose, pH, and number of viable bacteria of the normal citric acid fermenting *Oenococcus oeni* strain DSM 15568 as a function of time in the activation composition solution incubated at 23°C. The activation composition solution was prepared by the addition of water to the.dry activation composition described in the text.

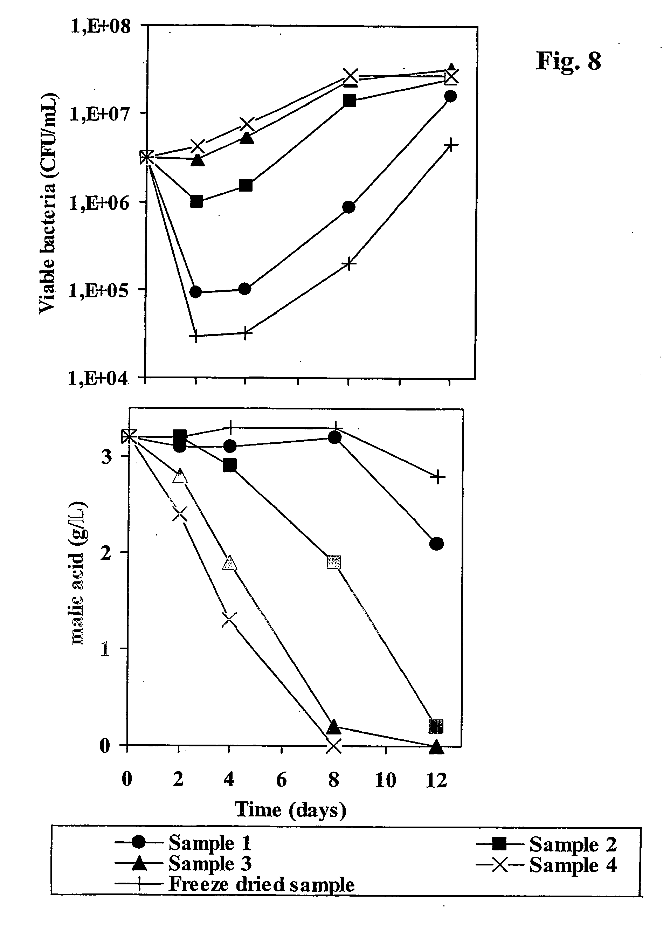

Figure 8. Number of viable bacteria and malic acid concentration in the experimental wine inoculated with activated samples of the normal citric acid fermenting strain *Oenococcus oeni* DSM 15568 and kept at 23°C. The activated samples, named 1, 2, 3, and 4 were harvested from the bacteria activation composition solution after respectively 4, 8, 19 and 46 hours of activation (Fig. 7). Included in the experiment was also the direct inoculation of freeze dried *Oenococcus oeni* DSM 15568.

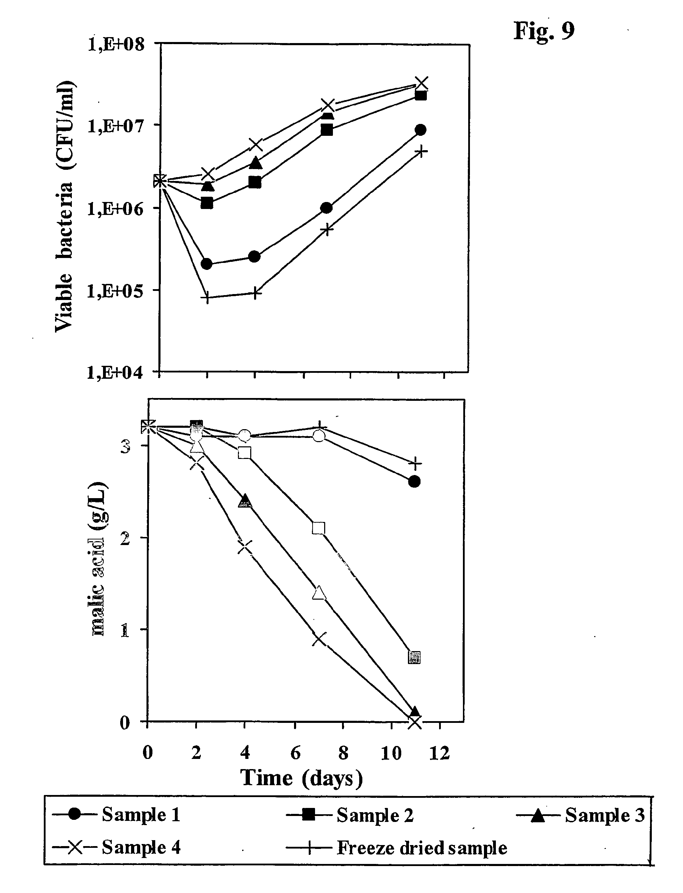

Figure 9. Number of viable bacteria and malic acid concentration in the experimental wine inoculated with activated samples of the selected non-citric acid fermenting strain *Oenococcus oeni* DSM 15569, and kept at 20°C. The activated samples, named 1, 2, 3, and 4 were harvested from the bacteria activation composition solution described in the text after respectively 8, 16, 24 and 38 hours of activation. Included in the experiment was also the direct inoculation of freeze dried *Oenococcus oeni* DSM 15569.

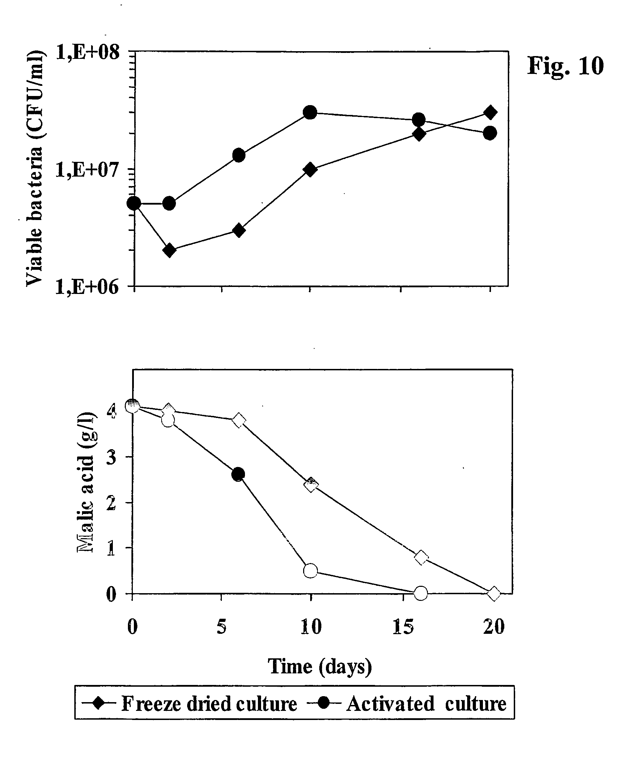

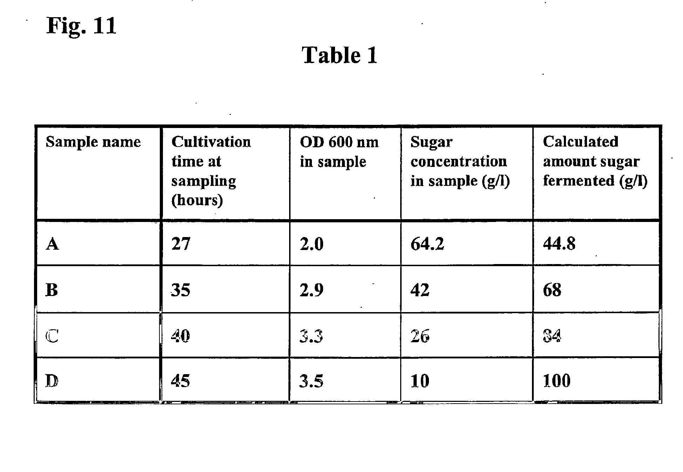

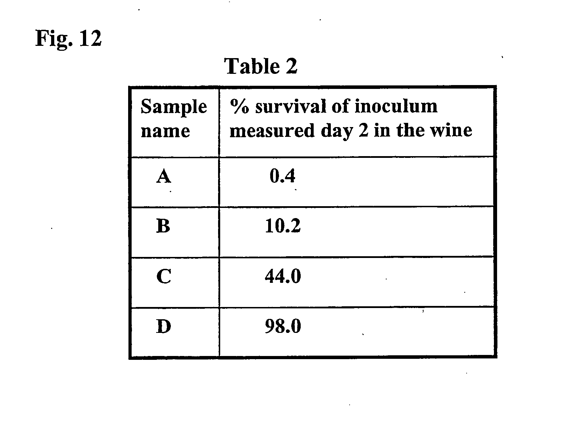

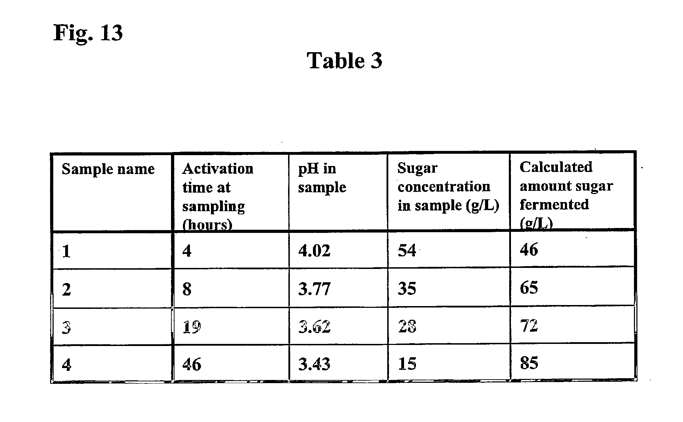

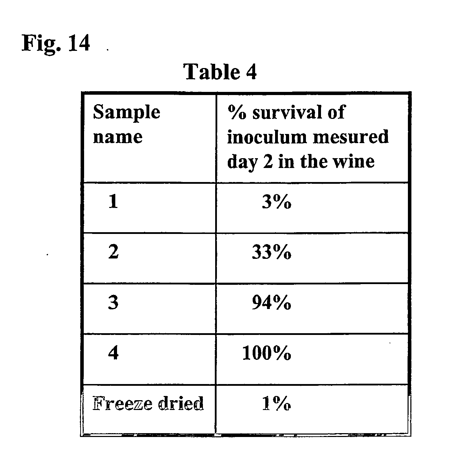

Figure 10. Number of viable bacteria and malic acid concentration in Chardonnay wine from California inoculated with the commercial product Viniflora oenos from Chr. Hansen A/S, Denmark, which contain *Oenococcus oeni* strain DSM 7008. The freeze dried product was either inoculated directly into the experimental wine as recommended by the producer, or inoculated after 24 hours activation in the activation composition solution described in the text. The wine was kept at 24°C.

Table 1. Data for sample A, B, C, and D sampled during the propagation of the selected non-citric acid fermenting mutant strain *Oenococcus oeni* DSM 15571 in the cultivation and adaptation medium shown in Fig. 2.

Table 2. Survival rates of the selected non-citric acid fermenting mutant strain Oe*nococcus oeni* DSM 15571 in the experimental wine measured 2 days after inoculation of the freeze dried samples A, B, C, and D (Fig. 3). The survival rate was calculated as the % of the inoculated bacteria which was alive day 2 in the wine.

Table 3. Data for sample 1, 2, 3, and 4 sampled during the activation of the normal citric acid fermenting strain *Oenococcus oeni* DSM 15568 in the activation composition solution (Fig. 7).

Table 4. Survival rates of the normal citric acid fermenting strain *Oenococcus oeni* DSM 15568 in the experimental wine measured 2 days after inoculation of the activated bacteria samples 1, 2, 3, and 4 (Figure 8). The survival rate was calculated as the % of the inoculated bacteria which was alive day 2 in the wine.

### Definitions

**Activation or adaptation of microbial organisms:** Both terms refer to methods involving placing a microbial organism under conditions that allow for the physiological changes necessary in order for said microbial organism to survive and grow in a new liquid composition with harsh conditions. In particular, activation or adaptation cover placing a freeze-dried, frozen or otherwise preserved microbial organism in a medium for a specific time period that allow said physiological changes, before said microbial organism is placed in a new liquid composition with harsh conditions. Harsh conditions may for example be low pH, high ethanol content or a mixture of both.

**Directly:** The term "added directly to" is meant to encompass that the compound, i.e. the frozen or freeze-dried microbial organism is added directly to the liquid composition in the frozen or freeze-dried state without any preceding adaptation, activation and/or expansion.

**Ethanol content:** the ethanol content is always indicated as volume percent (vol%) unless otherwise specifically indicated, hence an ethanol content of x% refers to x vol% ethanol.

**Frozen:** The microbial organism is frozen when it is stored at a temperature below 0°C. The microbial organism may be frozen according to any conventional protocol. In general the microbial organism is frozen by mixing said microbial organism with suitable cryoprotectants such as glycerol, gelatine or Na-caseinate and incubating the mixture at a temperature below 18°C.

**Freeze dried:** Freeze-drying a microbial organism involves freezing said microbial organism generally in the presence of a suitable cryoprotectant, and subsequently removing trapped ice by reducing the pressure and causing it to sublime. The microbial organism according to the present invention may be freeze dried using any conventional method known to the person skilled in the art. For example any of the methods described in "Fundamentals of Freeze Drying, J. D. Mellor,1978, Academic Press.

### Detailed description of the invention

### Microbial organisms capable of fermenting malic acid

In one aspect the present invention relates to microbial organims capable of fermenting malic acid to lactic acid. Preferably, said microbial organism when placed in a medium containing a predetermined amount of citric acid is only capable of degrading at the most 80% of said citric acid. Even more preferably, the microbial organism is only capable of degrading at the most 70%, such as 60%, for example 50%, such as 40%, for example 30%, such as 25%, for example 20%, such as 15%, for example 12%, such as 10% of said citric acid. Hence, it is preferred that the microbial organism is only capable of degrading in the range of 0 to 50%, more preferably 0 to 40%, even more preferably 0 to 30%, yet more preferably 0 to 20% of said citric acid. It is furthermore preferred that the microbial organism is only capable of degrading at the most 50%, more preferably at the most 40%, even more preferably at the most 30%, yet more preferably at the most 20%, even more preferably at the most 10% of said citric acid within for example 3 weeks, more preferably within 2 weeks, such as within 13, for example 12, such as 11, for example 10 days. In a preferred embodiment of the invention the microbial organism is only capable of degrading at the most 50%, more preferably at the most 40%, even more preferably at the most 30%, yet more preferably at the most 20%, even more preferably at the most 15% of the initial citric acid even during long term incubation, such as storage for 30 days, for example for 40 days, for example for 50 days, such as for 60 days, for example for 80 days, such as for 100 days, preferably for at least 40 days, more preferably for at least 50 days.

Because the citric acid degradation in general is delayed compared to the malic acid degradation (see for example fig. 6B as well as the background section herein above) it is preferred that the microbial organism, when added to a medium comprising malic acid and citric acid (preferably fermented grape juice), said microbial organism has not degraded more 50%, more preferably not more than 40%, even more preferably not more than 30%, yet more preferably not more than 20%, even more preferably not more than 15% of the initial citric acid even 1, such as 2, for example 3, such as 4, for example 5 days, such as 10 days, for example 15 days, such as 20 days, for example 30 days, such as 40 days subsequent to completion of the malolactic fermentation. Within the meaning of the present invention, the malolactic acid fermentation is defined to be completed when the medium (preferably fermented grape juice) comprises at the most 30 mg/L, preferably at the most 15 mg/L malic acid.

In a very preferred embodiment of the invention the microbial organism is not capable of degrading more than 50%, preferably not more than 40%, more preferably not more than 30%, even more preferably not more than 20% of the initial citric acid, for as long as said microbial organism is metabolically active.

Preferably, the microbial organism when placed in a liquid composition comprising a predetermined amount of malic acid is capable of degrading at least 30%, such as 50%, for example 70%, such as 80%, at least 90%, for example at least 95% of said malic acid. Preferably, the microbial organism is capable of degrading in the range of 70 to 100%, more preferably in the range of 80 to 100%, even more preferably in the range of 90 to 100% of said malic acid.

More preferably, the microbial organism when placed in a liquid composition comprising a predetermined amount of malic acid is capable of fermenting at least 30%, such as 50%, for example 70%, such as 80%, at least 90%, for example at least 95% of said malic acid to lactic acid.

In a very preferred embodiment, the microbial organism when placed in a liquid composition comprising a predetermined amount of malic acid is capable of completing malolactic fermentation, i.e. is capable of fermenting malic acid to an end concentration of malic acid of at the most 30 mg/L, more preferably at the most 15 mg/L.

Said degradation of malic acid preferably is completed within at the most 1 month, preferably within at the most 3 weeks, more preferably within at the most 2 weeks, such as 13, for example 12, such as 11, for example 10, such as 9 days.

The liquid composition comprising said predetermined amount of malic acid and/or citric acid furthermore preferably comprises one or more of the following parameters
- preferably a pH in the range of 2 to 7, preferably in the range of 3 to 6, more preferably in the range of 3 to 5, even more preferably in the range of 3 to 4, for example in the range of 3.1 to 3.8, such as in the range of 3.2 to 3.6, for example around 3.4; and/or
- preferably an ethanol content of more than 10%, preferably more than 11%, such as more than 12%, preferably an ethanol content in the range of 10 to 14%, such as in the range of 10.5 to 13.5%, for example in the range of 11 to 13%, such as in the range of 11.5 to 12.5%, for example around 10%, such as around 10.5%, for example around 11%, such as around 11.5%, for example around 12%, such as around 12.5%, for example around 13%, such as around 13.5%, for example around 13.9% and/or
   ○ preferably in the range of 0.1 to 30 g/L sugar, more preferably in the range of 0.5 to 25 g/L, even more preferably in the range of 1 to 20 g/L, such as in the range of 1 to 15 g/L, for example in the range of 1 to 10, such as in the range of 2 to 9, such as in the range of 3 to 8, such as in the range of 4 to 6, for example around 5 g/L sugar and/or
- preferably in the range of 1 to 50 g/L, more preferably in the range of 1 to 25 g/L, even more preferably in the range of 1 to 10 g/L, for example in the range of 2 to 8 g/L, such as in the range of 2 to 6 g/L, for example in the range of 3 to 4 g/L, such as around 3.3 g/L of malic acid and/or
- preferably in the range of 1 to 5000 mg/L, more preferably in the range of 10 to 2500 mg/L, even more preferably in the range of 100 to 1000 mg/L, for example in the range of 200 to 800 mg/L, such as in the range of 300 to 600 mg/L, for example in the range of 400 to 500 mg/L, such as around 450 mg/L of citric acid.

It is preferred that said microorganism is incubated with said fermented fruit juice at a temperature of in the range of 15 to 30°C, such as in the range of 20 to 25°C, for example around 23°C.

Preferably, the microbial organism is capable of degrading malic acid and/or citric acid as indicated herein above when said organism is present at a concentration of CFUs (colony forming units) in the range of 1 x 10³ to 5 x 10¹² per ml, preferably in the range of 1 x 10⁴ to 5 x 10¹⁰ per ml, more preferably in the range of 1 x 10⁵ to 5 x 10⁸ per ml, for example in the range of 1 x 10⁶ to 5 x 10⁷ per ml.

In one preferred embodiment of the present invention the microbial organism is capable of reducing malic acid within 9 days to less than 1 g/L, such as less than 0,5 g/L, for example less than 0,1 g/L, such as less than 30 mg/L, for example less than 15 mg/L, when incubated at a temperature of approximately 23°C, when said microbial organism is added directly in a frozen or freeze dried state to a fermented fruit juice at a concentration of CFUs in the range of 1 x 10⁶ to 5 x 10⁷, wherein said fermented fruit juice is prepared by yeasting a sterile fruit juice without added sulphite resulting in a fermented fruit juice having an ethanol content of 12.0 vol%, pH 3.4, below 5 g/L residual sugar, 3.3 g/L of malic acid, and 450 mg/L of citric acid.

Furthermore, it is preferred that the microbial organism reduces the citric acid content by less than 50%, such as less than 20%, for example less than 10% within 10 days, preferably within 20 days, more preferably within 40 days, for example within 50 days, such as within 100 days, when incubated at a temperature of approximately 23°C, when said microbial organism is added directly in a frozen or freeze dried state to a fermented fruit juice at a concentration of CFUs in the range of 1 x 10⁶ to 5 x 10⁷ per ml, wherein said fermented fruit juice is prepared by yeasting a sterile fruit juice without added sulphite resulting in a fermented fruit juice having an ethanol content of 12.0 vol%, pH 3.4, below 5 g/L residual sugar, 3.3 g/L of malic acid, and 450 mg/L of citric acid.

The microbial organism according to the present invention preferably has at least one of the following characteristics, when said microbial organism in a frozen or freeze dried state is added directly into a fermented fruit juice:
i) a survival rate which is at least 1 % after two days at 23°C in a fermented sterile fruit juice with a pH of less than 4 and comprising at least 12 vol% ethanol
ii) a survival rate which is at least 70% after two days at 17°C in a fermented sterile fruit juice with a pH of less than 4 comprising at least 13.9 vol% ethanol

Preferably, the survival rate is at least 5%, such as at least 10%, for example at least 15%, such as at least 20%, for example at least 25%, such as at least 30%, for example at least 35%, such as at least 40%, for example at least 45%, such as at least 50%, for example at least 55%, such as at least 60%, for example at least 65%, such as at least 70%, for example at least 75%, such as at least 80% after two days at 23°C in a fermented sterile fruit juice with a pH of less than 4, preferably in the range of 3 to 4, for example in the range of 3.1 to 3.8, such as in the range of 3.2 to 3.6, for example around 3.4 and comprising at least 12 vol% ethanol, preferably around 12 vol% ethanol.

In one embodiment of the invention the microbial organism has a survival rate which is at least 1%, for example at least 5%, such as at least 10%, for example at least 15%, such as at least 20%, for example at least 25%, such as at least 30%, for example at least 35%, such as at least 40%, for example at least 45%, such as at least 50%, for example at least 55%, such as at least 50%, for example at least 65%, such as at least 70%, for example at least 75%, such as at least 80% after two days at 23°C, when added directly to a wine prepared by yeasting a sterile grape fruit juice without added sulphite, said wine having an ethanol content of 12.0 vol%, pH 3.4, below 5 g/L residual sugar, 3.3 g/L of malic acid, and 450 mg/L of citric acid.

In another embodiment of the present invention the survival rate is preferably at least 70%, more preferably at least 75%, for example at least 80%, such as at least 85%, for example at least 90% after two days at 17°C in a fermented sterile fruit juice with a pH of less than 4, preferably in the range of 3 to 4, for example in the range of 3.1 to 3.8, such as in the range of 3.2 to 3.6, for example around 3.4, wherein the fermented sterile fruit juice comprises at least 13.9 vol% ethanol, preferably around 13.9 vol% ethanol.

In another embodiment of the invention the microbial organism has a survival rate which is in the range of 70% to 100%, more preferably at least 75%, for example at least 80%, such as at least 85%, for example at least 90% after two days at 18°C, when added directly into a wine prepared with 30 ppm SO₂ added before the alcoholic fermentation, said wine having an ethanol content of 13.8 vol%, pH 3.5, 1.3 g/L malic acid, and 340 mg/L of citric acid.

In yet another embodiment of the present invention the microbial organism has a survival rate which is at least 80%, such as at least 85%, for example at least 90% after two days at 17°C, when added directly to a wine prepared without SO₂ added, said wine having an ethanol content of 13.9 vol%, pH 3.6, 1.7 g/L malic acid, and 320 mg/L of citric acid.

The microbial organism according to the present invention is preferably resistant to one or more different bacteriophages, more preferably the organism is in general resistant to bacteriophages.

Furthermore it is preferred that the microbial organism retains its characteristics during propagation and concentration, i.e. it is preferred that the microbial organism retains its capability of survival, of degrading malic acid and/or citric acid as described herein above during propagation and concentration. Preferably, the microbial organism retains it characteristics after 10, such as after 20, for example after 30, such as after 40, such as after 50, for example after 60, such as after 70, for example after 80, such as after 90, for example after 100 population doublings. It is preferred that the microbial organism retains it characteristics after concentration as described herein below.

In one preferred embodiment of the present invention the microbial organism is a bacterial strain, more preferably the microbial organism is a bacterial strain belonging to the *Oenococcus* family, even more preferably, the microbial organism is an *Oenococcus oeni* strain. For example the microbial organism may be selected from the group consisting of strains deposited under the accession numbers DMS 15569, DMS 15570, and DSM 15571.

### Concentrate of microbial organisms

In one aspect the present invention relates to a concentrate of microbial organisms comprising or consisting of any of the above mentioned microbial organisms, wherein said concentrate has a content of colony forming units being in the range of 10⁹ to 10¹² per g.

The concentrate may be prepared by any conventional method, for example the concentrate may be prepared by centrifugation, such as by centrifugation of a liquid composition comprising the microbial organisms according to any protocol known to the person skilled in the art. For example the liquid composition may be centrifuged at in the range of centrifugation 2000 to 10,000 g, such as in the range of 3000 to 9000m for example in the range of 4000 to 8000, such as in the range of 5000 to 7000, for example around 6000 g for in the range of 1 to 120 minutes, for example for in the range of 5 to 60 minutes, such as for around 20 minutes. It is also comprised within the present invention that the concentrate may be prepared using more advanced centrifugation methods, for example methods involving use of different centrifugational forces or by using centrifuges allowing the liquid composition to be added continuously and the eluate to be harvested continuously, Said liquid composition is in general a cultivation medium.

Prior to preparation of the concentrate the microbial organisms may have been cultivated in any conventional medium known to the person skilled in the art.

However, in one preferred embodiment of the invention, the microbial organism has been cultivated in any of the adaptation media described herein below, said adaptation medium comprising at least 6% sugar. Preferably, said adaptation medium comprises at least 5% glucose and/or 5% fructose or at least 3% glucose and at least 3% fructose. Preferably microbial organism has been incubated in said adaptation medium for at least 12 hours, such as at least 24 hours, for example around 48 hours prior to harvest by for example centrifugation.

The harvested microbial organisms may in one embodiment of the invention be mixed with any suitable cryoprotectants, for example glycerol, gelatine, Na-caseinate or sucrose and stored frozen at a temperature in the range of -90°C to 0°C, for example at around -80°C or around -20°C. Hence, the concentrate may in one embodiment comprise frozen microbial organisms.

It is also comprised within the present invention that the harvested microbial organisms may be dried by for example air drying, spray drying, freeze drying, drum drying or dried using a tray drier, ring-dryer, fluid-bed dryer or vacuum-band dryer. Drying may be done using any suitable protocol known to the person skilled in the art.Hence, the concentrate may in one embodiment comprise dried microbial organisms, such as freeze-dried microbial organisms.

In one embodiment the harvested microbial organisms are freeze dried. Freeze drying may be done according to any suitable protocol known to the person skilled in the art, for example according to any of the protocols described in "Fundamentals of Freeze Drying", J. D. Mellor, 1978, Academic Press.

### Preferential degradation of malic acid over citric acid

In one aspect the present invention relates to methods of preferentially degrading malic acid over citric acid in a liquid composition comprising malic acid and citric acid, said method comprising the steps of
i) Providing a liquid composition comprising malic acid and citric acid;
ii) Providing any of the microbial organisms described herein above, wherein said microbial organism has been frozen or freeze dried according to any conventional protocol,
iii) Adding said freeze dried or frozen microbial organism directly to said liquid composition
iv) incubating said liquid composition and said microbial organism under conditions which allow degradation of at least 70% of the malic acid,
v) thereby obtaining a final liquid composition comprising less than 30% of the initial malic acid and at least 20% of the initial citric acid.

The liquid composition may in one preferred embodiment of the invention be fruit juice or fermented fruit juice, preferably grape juice or fermented grape juice, such as wine, for example red wine, white wine, rosé or sparkling wine.

The liquid composition preferably has a pH in the range of 2 to 5, such as 3 to 4, for example around 3.4.

Furthermore, the liquid composition preferably comprises in the range of 5 to 15 vol% ethanol, such as 10 to 14 vol% ethanol, for example 11 to 14 vol%, such as 12 to 14 vol%, for example at least 12 vol% ethanol.

It is also preferred that the liquid composition comprises in the range of 0.1 to 30 g/L sugar, more preferably in the range of 0.5 to 25 g/L, even more preferably in the range of 1 to 20 g/L, such as in the range of 1 to 15 g/L, for example in the range of 1 to 10, such as in the range of 2 to 9, such as in the range of 3 to 8, such as in the range of 4 to 6, for example around 5 g/L sugar. More preferably, the liquid composition comprises less than 10 g/L, such as less than 7 g/L, for example less than 5 g/L sugar.

It is furthermore preferred that the liquid composition comprises in the range of 1 to 50 g/L, preferably 1 to 25 g/L, even more preferably in the range of 1 to 10 g/L, for example in the range of 2 to 8 g/L, such as in the range of 2 to 5 g/L, for example in the range of 3 to 4 g/L, such as around 3.3 g/L malic acid.

It is also preferred that the liquid composition comprises in the range of 1 to 5000 mg/L, more preferably in the range of 10 to 2500 mg/L, even more preferably in the range of 100 to 1000 mg/L, for example in the range of 200 to 800 mg/L, such as in the range of 300 to 600 mg/L, for example in the range of 400 to 500 mg/L, such as around 450 mg/L of citric acid. Preferably, the liquid composition comprises in the range of 50 to 2000 mg/L, such as 100 to 1000 mg/L, for example 200 to 800 mg/L, such as 400 to 500 mg/L citric acid.

It is preferred that the final liquid composition comprises at least 50%, preferably at least 60%, more preferably at least 70%, for example at least 75%, such as at least 80% of the initial citric acid.

It is furthermore preferred that the finial liquid composition comprises less than 20%, preferably less than 15%, such as less than 10%, for example less than 5% of the initial malic acid.

The microbial organism is preferably added at a concentration of CFUs in the range of 1 x 10³ to 5 x 10¹² per ml, preferably in the range of 1 x 10⁴ to 5 x 10¹⁰ per ml, more preferably in the range of 1 x 10⁵ to 5 x 10⁸ per ml, for example in the range of 1 x 10⁶ to 5 x 10⁷ per ml. More preferably, the microbial organism is added at a concentration less than 5 x 10⁷ CFU per ml of the liquid composition, such as at a concentration of in the range of 1 x 10⁶ to 5 x 10⁷ CFUs per ml of the liquid composition.

The conditions comprises incubation at a temperature in the range of 5 to 40°C, for example 15 to 30°C, such as in the range of 17 to 23°C.

In a preferred embodiment, the method comprises incubation of said liquid composition for at least the time required to obtain the desired fermentation of malic acid, however it is preferred that the incubation is longer, for example at least 5 days, such as at least 10 days, for example at least 15 days, such as at least 20 days, for example at least 30 days, such as at least 40 days more than the time required to obtain the desired malic acid concentration.

In a very preferred embodiment, the method comprises incubation of said liquid composition for a longer period of time than required for completion of malolactic fermentation, for example for at least 5 days, such as at least 10 days, for example at least 15 days, such as at least 20 days, for example at least 30 days, such as at least 40 days more than required for completion of malolactic fermentation.

### Induction of malolactic fermentation

The present invention also relates to methods of inducing malolactic fermentation, comprising the steps of
i) Providing a liquid composition comprising malic acid
ii) Providing a microbial organism, which may be any of the microbial organisms described herein above,
iii) Incubating said liquid composition with said microbial organism under conditions which allow degradation of malic acid,
iv) thereby inducing malolactic fermentation

The liquid composition is in one preferred embodiment a fruit juice, such as a fermented fruit juice. For example, the liquid composition may be a grape fruit juice, a fermented grape fruit juice or a wine. The wine may for example be selected from the group consisting of red wines, white wines and sparkling wines.

Preferably, the microbial organism is in a frozen or freeze-dried state. The methods thus preferably comprises that the microbial organism in a frozen or freeze-dried state is added directly to the liquid composition, for example to the grape juice or a fermented grape juice.

The microbial organism is preferably added to the liquid composition at a concentration of CFUs in the range of 1 x 10³ to 5 x 10¹² per ml, preferably in the range of 1 x 10⁴ to 5 x 10¹⁰ per ml, more preferably in the range of 1 x 10⁵ to 5 x 10⁸ per ml, for example in the range of 1 x 10⁶ to 5 x 10⁷ per ml. More preferably, the microbial organism is added at a concentration less than 5 x 10⁷ CFU per ml of the liquid composition, such as at a concentration of in the range of 1 x 10⁶ to 5 x 10⁷ CFUs per ml of the liquid composition.

The liquid composition, for example the grape juice or a fermented grape juice preferably has a pH in the range of 2 to 5, such as 3 to 4, for example around 3.4.

Furthermore, the liquid composition such as the grape juice or a fermented grape juice preferably comprises in the range of 5 to 15 vol% ethanol, such as 10 to 14 vol% ethanol, for example 11 to 14 vol%, such as 12 to 14 vol%, for example at least 12 vol% ethanol.

It is also preferred that the liquid composition, such as the grape juice or a fermented grape juice comprises in the range of 0.1 to 30 g/L sugar, more preferably in the range of 0.5 to 25 g/L, even more preferably in the range of 1 to 20 g/L, such as in the range of 1 to 15 g/L, for example in the range of 1 to 10, such as in the range of 2 to 9, such as in the range of 3 to 8, such as in the range of 4 to 6, for example around 5 g/L sugar. More preferably, the liquid composition comprises less than 10 g/L, such as less than 7 g/L, for example less than 5 g/L sugar.

It is furthermore preferred that the liquid composition such as the grape juice or a fermented grape juice comprises in the range of 1 to 50 g/L, preferably 1 to 25 g/L, even more preferably in the range of 1 to 10 g/L, for example in the range of 2 to 8 g/L, such as in the range of 2 to 5 g/L, for example in the range of 3 to 4 g/L, such as around 3.3 g/L malic acid.

It is also preferred that the liquid composition such as the grape juice or fermented grape juice comprises in the range of 1 to 5000 mg/L, more preferably in the range of 10 to 2500 mg/L, even more preferably in the range of 100 to 1000 mg/L, for example in the range of 200 to 800 mg/L, such as in the range of 300 to 600 mg/L, for example in the range of 400 to 500 mg/L, such as around 450 mg/L of citric acid. Preferably, the liquid composition comprises in the range of 50 to 2000 mg/L, such as 100 to 1000 mg/L, for example 200 to 800 mg/L, such as 400 to 500 mg/L citric acid.

In one embodiment of the invention the Malolactic fermentation may for example be induced according to the protocols described in example 3 or 4.

### Method of producing a microbial organism

The present invention also describes methods of producing the microbial organism described herein above. The methods comprise the steps of
i) Providing a starting microbial organism resistant to a pH below 5 and an ethanol concentration of at least 8%,
ii) Subjecting said microbial organism to mutagenesis, thereby obtaining more than one different mutated microbial organism
iii) Selecting mutated microbial organisms capable of fermenting malic acid to lactic acid, wherein said microbial organism when placed in a medium containing a predetermined amount of citric acid is only capable of degrading at the most 80% of said citric acid, and wherein the microbial organism has at least one of the following characteristics, when said microbial organism in a frozen or freeze dried state is added directly into a fermented fruit juice:
   a) a survival rate which is at least 1 % after two days at 23°C in a fermented sterile fruit juice comprising at least 12 vol% ethanol;
   b) a survival rate which is at least 70% after two days at 17°C in a fermented sterile fruit juice comprising at least 13.9 vol% ethanol

The starting microbial organism is preferably capable of fermenting malic acid, more preferably, the starting microbial organism is capable of fermenting malic acid to lactic acid.

The starting microbial organism is preferably resistant to low pH, i.e. to pH below 5, preferably said organism is resistant to pH around 4.5 or lower, more preferably around 4.0 or lower, for example around 3.6 or lower, such as 3.4 or lower, for example said microbial organism is resistant to pH 3.2.

The starting microbial organism is furthermore preferably resistant to high ethanol concetration, i.e. to an ethanol concentration of at least 8 vol%, preferably said organism is resistant to an ethanol concentration of around 9 vol% or higher, more preferably around 10 vol% or higher, for example around 11 vol% or higher, such as 12.5 vol% or higher, for example said microbial organism is resistant to an ethanol concentration of around 13%.

In one preferred embodiment of the present invention the starting microbial organism is a bacterial strain, more preferably the starting microbial organism is a bacterial strain belonging to the *Oenococcus* family, even more preferably, the starting microbial organism is an *Oenococcus oeni* strain.

The starting microbial organism may be obtained from any suitable source, it may for example be purchased commercially or isolated from any suitable source known to the skilled person. In one embodiment the starting microbial organism is isolated from a fermented fruit juice, for example from a wine, preferably from a wine with completed spontaneous malolactic fermentation.

Mutagenesis may be done by any conventional method known to the person skilled in the art. In one embodiment mutagenisis comprises incubating the microbial organism in the presence of a mutagenising agent. Said mutagenising agent may for example be selected from the group consisting of ethylmethanesulfunate, N-ethyl-N'-nitro-N-nitrosoguanidine and 1-(2-hydroxyethyl)-1-nitrosourea.

Incubation with the mutagenising agent may be done for any suitable time, for example for in the range of 5 min. to 24 hours, such as in the range of 10 minutes to 12 hours, for example in the range of 15 minutes to 6 hours, such as in the range of 30 minutes to 4 hours, for example in the range of 1 hour to 3 hours, such as in the range of 1.5 hours to 2.5 hours, for example around 2 hours

After mutagenisis, mutated microbial organisms with the desired characteristic may be selected, for example mutated microbial organisms with any of the characteristics outlined herein above may be selected.

In one embodiment of the invention microbial organisms with reduced citric acid degradation activity are selected. The selection may for example be performed based on the methods described by G. M. Kempler and L. L. McKay (Appl. Environ. Microbiol.; 1980, 39, 926-927)as described in example 1 herein below.

One non-limiting example of how to prepare a microbial organism according to the present invention is described in example 1.

### Preparing freeze-dried microbial organisms

Surprisingly, the present invention discloses that freeze dried microbial organisms have an increased survival rate after direct inoculation into wine, if the microbial organisms have been cultivated in the adaptation medium described herein below.

Hence, the present invention also relates to methods of preparing a dried microbial organism capable of fermenting malic acid to lactic acid, which has reduced citric acid degrading activity and which is capable of survival after direct inoculation into fermented fruit juice, said method comprising the steps of
i) Providing a microbial organism as described herein above
ii) Providing an adaptation medium as described herein below comprising at least 6% sugar
iii) Incubating said microbial organism in said adaptation medium under conditions allowing growth of said microbial organism
iv) Harvesting said microbial organism
v) Drying said microbial organism

Preferably microbial organism is incubated in said adaptation medium for at least 12 hours, such as at least 24 hours, for example around 48 hours prior to harvest. The incubation is preferably at a temperature in the range of 15 to 40°C, such as in the range of 20°C to 37°C, for example in the range of 25°C to 35°C, preferably around 30°C. Furthermore, during incubation the pH is preferably kept constant in the range of pH 3.5 to 6.0, such as in the range of pH 4 to 5, preferable around pH 4.5.

The microbial organism may be harvested by any conventional technique known to the person skilled in the art. In general, harvesting said microbial organism comprises centrifugation.

Drying said microbial organism may be done by a number of different methods including, but not limited to air drying, spray drying, freeze drying, drum drying or drying using a tray drier, ring-dryer, fluid-bed dryer or vacuum-band dryer.

Preferably however, the microbial organism is freeze-dried. Freeze-drying may be done according to any protocol known to the skilled person as for example as described in Fundamentals of Freeze Drying, J. D. Mellor, 1978, Academic Press. In general the microbial organism is mixed with a suitable cryoprotective, for example gelatine and/or sucrose and freeze dried using any suitable freeze drier.

### Adaptation medium

The adaptation medium according to the present invention comprises at least 6%, preferably at least 7%, more preferably at least 8%, such as at least 9%, for example at least 10%, such as at least 11 % sugar by weight. The sugar may be any suitable sugar for example the sugar may be selected from the group consisting of glucose, fructose, sucrose and maltose. Preferably the sugar is glucose and/or fructose.

In one preferred embodiment the adaptation medium comprises at least 3%, preferably at least 4%, more preferably at least 5%, such as at least 6%, for example at least 7%, such as at least 8%, for example at least 9%, such as at least 10%, for example in the range of 3 to 10%, such as in the range of 4 to 8%, for example in the range of 5 to 6% glucose.

It is also comprised within the present invention that the adaptation medium comprises at least 3%, preferably at least 4%, more preferably at least 5%, such as at least 6%, for example at least 7%, such as at least 8%, for example at least 9%, such as at least 10%, for example in the range of 3 to 10%, such as in the range of 4 to 8%, for example in the range of 5 to 6% fructose.

In a preferred embodiment the adaptation medium comprises at least 3%, preferably at least 4%, more preferably at least 5%, such as at least 6%, for example at least 7% glucose and at least 3%, preferably, at least 4%, more preferably at least 5%, such as at least 6%, for example at least 7% fructose.

The adaptation medium furthermore preferably comprises one or more selected from the group consisting of nitrogen sources, salts, detergents and buffers.

The nitrogen source may be any suitable nitrogen source known to the skilled person. Preferably the nitrogen source comprises amino acids, for example free amino acids or amino acids comprised within a polypeptide or a peptide, It is preferred that the nitrogen source comprises free amino acids and/or short peptides. Short peptides may be prepared by hydrolysing a protein source. In one embodiment of the invention the nitrogen source is selected from the group consisting of yeast extracts, Casein hydrolysate (hydrolysed milk protein) and Bacto peptone (hydrolysed meat).

The salt may for example be MnSO₄ or MgSO₄, NaCl, MgCl₂ or any other suitable salt.

The pH of the adaptation medium is preferably in the range of 2 to 8, more preferably in the range of 3 to 7, even more preferably in the range of 3.5 to 6, even more preferably in the range of 4 to 5, for example around 4.5. The buffer is therefore preferably a buffer capable of buffeting the medium to said pH.

The detergent may be any suitable detergent, preferably, a detergent containing derivates of unsaturated fatty acids, for example, Tween 80.

In one embodiment of the invention, the adaptation medium is the adaptation medium described in example 2 herein below.

### Deposition of microbial organisms

The present invention refers to microbial organisms deposited under the accession numbers DSM 15568, DSM 15569, DSM 15570, and DSM 15571 at DSMZ- Deutsche Sammlung von Mikroorganismen und Zellkulturen GmbH, Mascheroder Weg 1b, 38124 Braunschweig, GERMANY. Details regarding the deposited microbial organisms are given in the stable below.

| **Accession number** | **Date of deposit** | **Taxonomic description** |
|---|---|---|
| DSM 15568 | 14 April, 2003 | *Oenococcus oeni* |
| DSM 15569 | 14 April, 2003 | *Oenococcus oeni* |
| DSM 15570 | 14 April, 2003 | *Oenococcus oeni* |
| DSM 15571 | 14 April, 2003 | *Oenococcus oeni* |

The deposits were made under the provisions of the Budapest Treaty on the International recognition of the Deposit of Microorganisms for the Purpose of Patent Procedure and Regulations thereunder.

### Examples

### Example 1.

### Selection of non-citric acid fermenting mutants of Oenococcus oeni.

Strains of *Oenococcus oeni* with resistance to pH below 3.2 and more than 13 vol% ethanol were isolated from different wines with completed spontaneously malolactic fermentation using techniques known in the art.

The objective of the mutagenesis of the *Oenococcus oeni* strains was to obtain mutants where the citric acid metabolism, depicted in Fig 1, was eliminated. Mutagenesis of the *Oenococcus oeni* strains was carried out by adding 0.2 ml ethylmethanesulfunate to 10 ml of a stationary phase culture of *Oenococcus oeni.* After incubation of the mixture for two hours at 30°C, 0.1 ml was transferred to 10 ml fresh cultivation medium and incubated for 48 hours at 30°C. The composition of the cultivation medium was by weight:
2% glucose
2% fructose
2% yeast extract (Oxoid Ltd., England)
0.02% MnSO₄·7H₂O
0.2% Tween™ 80
pH adjusted to 5.0 with 20% NaOH.

From the stationary phase culture, spread plates were made using the methods described by G. M. Kempler and L. L. McKay (Appl. Environ. Microbiol.; 1980, 39, 926-927) except that the agar used had the following composition:
1 % glucose
1 % fructose
1 % yeast extract (Oxoid Ltd., England)
0.02% MnSO₄·7H₂O
0.2% Tween™ 80
2% Agar (Agar-agar, Merck, Germany)
pH adjusted to 5.5 with 20% HCl

The plates were incubated for 10 days at 30°C. On the plates white colonies containing mutated non-citric acid fermenting bacteria could be differentiated from blue colonies containing normal citric acid fermenting bacteria.

### Example 2.

### Preparation of experimental wine for evaluation of selected non-citric acid fermenting Oenococcus oeni mutants.

A 5 litre sterile glass container was added 4 litre of sterile Biotta grape juice (Biotta AG, Switzerland) adjusted with sucrose to a total sugar concentration of 212 g/l and inoculated with 1.5 g of active dry yeast (*Saccharomyces cerevisiae,* Saint George S101, Fould-Springer, France). The juice was incubated at 23°C. After 14 days the alcoholic fermentation was completed and the wine was adjusted to pH 3.4 with 20% HCl. The concentration of total glucose and fructose in the wine was below 5 g/litre, the ethanol concentration was 12,0% (v/v), and the L-malic acid and citric acid concentration was 3.3 g/litre and 0.45g/liter respectively. The glucose, fructose, ethanol, malic acid, and citric acid concentrations were determined by the enzymatic test kits of Boehringer Mannheim, Germany.

### Examination of selected non-citric acid fermenting Oenococcus oeni mutants.

For unknown reason the growth of the selected mutants in commercially available cultivation media for lactic acid bacteria (MRS Broth from Oxoid Ltd.) were slow compared to the non-mutated strains. Also when pre-cultivated in MRS Broth for 48 hours at 30°C and inoculated directly from the cultivation broth into the experimental wine, the survival rate of the inoculated mutants in the wine measured 2 days after inoculation were 20-50 times lower compared to the non-mutated strains. Clearly, the mutation in the selected strains somehow effect the growth and the ability to survive direct inoculation into wine.

Examination of new cultivation and adaptation medium for the production of non-citric acid fermenting *Oenococcus oeni* mutants.

The selected non-citric acid fermenting *Oenococcus oeni* strain DSM 15571 were grown in the cultivation and adaptation medium of the following composition by weight:
5.5% glucose
5.5% fructose
3.9% yeast extract (Oxoid Ltd., England)
0.02% MnSO₄·7H₂O
0.2% Tween™ 80
pH adjusted to 4.5 with 20% HCl.

The cultivation and adaptation medium was sterilized at 121°C for 10 minutes and cooled to 30°C.

The medium was inoculated with the non-citric acid fermenting *Oenococcus oeni* strain DSM 15571 which had been pre-cultured in a medium with the same composition for 48 hours at 30°C.

The inoculated medium was held at 30°C and at constant pH 4.5 by addition of 20% NaOH. Figure 2 show the growth of the *Oenococcus oeni* strain measured as the optical density at 600 nm (OD600), the total concentration of sugar (glucose + fructose), and the calculated amount of fermented sugar in the medium.

At different times during the fermentation, 200 ml samples were removed. The name and time of the sampling, the OD600, the total concentration of sugar, and the calculated amount of fermented sugar in the samples are shown in Table 1. The bacteria were harvested from the sample by centrifugation. The bacteria concentrate from the centrifugation was re-suspended in sterile water containing 4% gelatine as cryoprotective and freeze dried using techniques known in the art.

The enumeration of viable bacteria in the freeze dried product and in inoculated wine was performed after appropriate dilution in water containing 0.1 % peptone and 0.9% NaCl, followed by pour plate seeding in agar. The composition of the agar used was by weight:
2% glucose
2% fructose
2% yeast extract (Oxoid Ltd., England)
0.02% MnSO₄·7H₂O
0.2% Tween™ 80
2% Agar (Agar-agar, Merck, Germany)
pH adjusted to 5.0 with 20% HCl.
The agar was autoclaved at 125°C for 10 minutes and cooled to 45°C before use. Viable counts were obtained as the number of colony forming units (CFU) after incubation at 30°C for 7 days

Based on the determination of the CFU/g in the freeze dried samples, 4 L experimental wine was inoculated directly with the freeze dried samples of *Oenococcus oeni* DSM 15571 to an initial concentration of 5 x 10⁶ CFU/ml wine. The wine was incubated at 23°C. Figure 3 shows the CFU/ml measured in the wines inoculated with sample A, B, C, and D. Table 2 show the survival rate of *Oenococcus oeni* DSM 15571 in the wine day 2 determined as % of the initial inoculation level.

The results in figure 3 shows that there was a minimum in the CFU/ml measured in the wine 2 days after inoculation after which time the bacteria started to grow. Figure 3 and Table 2 also shows that there was a very large difference in the survival of the inoculated bacteria samples in the wine after 2 days. Sample A, which was harvested from the fermentor when 44.8 g/L of the sugar was fermented (Table 1), survived poorly the inoculation into wine. Only 0.4% of the inoculated bacteria was alive in the wine after 2 days (Table 2). However, for sample B, C, and D, which was harvested from the fermentor when respectively 68, 84, and 100 g/L of the sugar was fermented, the survival rate of the bacteria day 2 in the wine increased to 10.2%, 44%, and 98% respectively. The results shows that there is a clear increase in the adaptation of the non-citric acid fermenting strain *Oenococcus oeni* DSM 15571 to survive direct inoculation into wine when more than 44.8 g/L of the sugar is fermented during the propagation of the bacteria mutant.

### Example 3.

### Induction of malolactic fermentation in the experimental wine by direct inoculation with freeze dried preparation of non-citric acid fermenting Oenococcus oeni.

The malolactic fermentation induced by freeze dried preparation of the non-citric acid fermenting strain *Oenococcus oeni* DSM 15571, prepared as described for sample D in Example 2, was examined in 4 L experimental wine inoculated directly with the freeze dried sample to an initial concentration of 2 x 10⁶ CFU/ml wine.

The results of this experiment are shown in Fig. 4 from which it appears that the survival rate of the strain was 90% measured 2 days after inoculation after which time the strains started to multiply in the wine and degrade the malic acid, which was exhausted after 10 days. The non-citric acid fermenting mutant did not degrade the citric acid in the wine and the concentration of acetic acid increased only from 390 to 450 mg/L during the experiment.

### Example 4.

### Induction of malolactic fermentation in California wines by direct inoculation with freeze dried preparation of non-citric acid fermenting Oenococcus oeni strains.

Freeze dried preparation of three non-citric acid fermenting mutants of *Oenococcus oeni,* DSM 15570, DSM 15569, and DSM 15571 were tested by direct inoculation into 250 L oak barrels containing different wines form Russian River and Sonoma, California (see description of the figures for further details) or by direct inoculation into the experimental wine described in example 2. All freeze dried preparations were prepared as previously described for sample D in Example 2. For comparison, a freeze dried commercial culture (Viniflora oenos from Chr. Hansen A/S, Denmark) of *Oenococcus oeni* (strain DSM 7008) with a normal citric acid metabolism was included.

The results from the experiments are shown in Fig. 5 and Fig. 6A. In all of the inoculated barrels the survival rate of the mutants measured two days after inoculation was 65 to 100%. All barrels completed the malic acid degradation within 19 to 24 days. The results show that the non-citric acid fermenting mutant strains did not degrade the citric acid in the wine and the concentration of acetic acid only increased 35 to 70 mg/L during the trials which was significantly less than the 221 to 247 mg/L increase measured for the normal citric acid fermenting strain.

Figure 6B shows the degradation of malic and citric acid in experimental wine after direct inoculation of freeze dried bacteria of strains DSM; 15569 and 15570. All freeze dried preparations were prepared as previously described for sample D in Example 2. The experimental wine was prepared as described in example 2 except that it contained 3.4 g/litre of malic acid and 0.49 g/litre of citric acid. For comparison Viniflora oenos and Viniflora CH35 (both available from Chr. Hansen A/S) were included. The experiment was conducted at 23°C. As is apparent malic acid fermentation is completed after 8 to 13 days. In the test strains essentially no citric acid is degraded, whereas in the control experiments, citric acid degradation is completed after 13 and 20 days respectively. After 50 days of incubation the wine incubated with DSM 15569 comprised 470 mg/L citric acid and the wine incubated with DSM 15570 comprised 440 mg/L citric acid. The starting concentration of citric acid in the wine was 490 mg/L.

Examples 5-7 are not part of the invention.

### Example 5.

### Bleeding of new dry activation composition.

A dry activation composition was produced by blending the following components: 50 g glucose
50 g fructose
10 g yeast extract (Oxoid Ltd., England)
0.45 g tartaric acid
01 g MnSO₄.7H₂O
20 g freeze dried *Oenococcus oeni* strain DSM 15568 (normal citric acid fermenting strain)

Tartaric acid is an organic acid with buffer capacity. The amount of tartaric acid in the above composition was chosen so that the dry composition, when water was added to a total of 1 L, resulted in a pH of 4.9 in the solution. The freeze dried *Oenococcus oeni* strain DSM 15568 in the composition contained 4 x 10¹¹ CFU/g and was prepared as described for sample A in Example 2.

### Examination of new dry activation composition.

The blended dry activation composition was re-hydrated by addition of water to a total of 1 L followed by incubation of the activation composition solution at 23°C. The activation composition solution, which from start contained a total of 100 g sugar/L and 8 x 10⁹ CFU/ml of *Oenococcus oeni* strain DSM 15568 was followed by the determination of total sugar/L, pH and CFU/ml. The results are shown in Fig. 7 from which it appear that during the 46 hours of activation the number of viable bacteria measured as CFU/ml was almost constant in the activation solution. The total sugar concentration decreased within 4 hours to less than 55g/L and ended at 15 g/L after 46 hours of activation while the pH decreased fast from the initial pH of 4.9 to pH 4.0 after 4 hours and ended at pH 3.43 after 46 hours..

At different time during the activation four samples, named 1, 2, 3, and 4 were removed from the solution. The name and time of the sampling, the pH, the amount of total sugar, and the calculated amount of sugar fermented in the samples are shown in Table 3.

1 ml of the samples 1, 2, 3, and 4 were inoculated directly into 2.5 L experimental wine in a 5 L container which resulted in an initial bacteria number of 3.2 x 10⁶ CFU/ml. The number of viable bacteria and the malic acid concentration in the wine was followed and the results are shown in Fig. 8. Table 4 show the % survival of the inoculated bacteria measured day 2 in the wine. Included in the experiment was also the direct inoculation into the experimental wine of freeze dried *Oenococcus oeni* strain DSM 15568 prepared as described for sample A in Example 2. The freeze dried preparation was inoculated to a concentration of 3.2 x 10⁶ CFU/ml.

Fig. 8 shows that there was a minimum in the CFU/ml measured in the wine 2days after inoculation after which time the bacteria started to grow. The results in Fig. 8 and Table 4 shows clearly that the bacteria inoculated from the activation solution survived better in the wine and conducted a faster malolactic fermentation than the freeze dried bacteria inoculated directly into the wine. The results further shows that the survival rate and the malic acid degradation performance of the bacteria in the wine increased with the incubation time of the bacteria in the activation solution. The survival rate day 2 in the wine of bacteria from samples taken from the activation solution after 4, 8, 19, and 46 hours incubation was 3%, 33%, 94%, and 100% respectively and the increase in the survival rates resulted in a significantly increased speed of the malolactic fermentation.

### Example 6.

### Examination of new dry activation composition containing non-citric acid fermenting Oenococcus oeni strain

A dry activation composition was produced as described in Example 5 except for the bacteria strain where 15 g freeze dried product of the selected non-citric acid fermenting mutant strain *Oenococcus oeni* DSM 15569 was used and that the amount of sugar was changed to 55 g glucose and 55 g fructose. The freeze dried strain was prepared as described for sample A in Example 2 and the product contained 3.5 x 10¹¹ CFU/g.

The dry activation composition was re-hydrated by addition of water to a total of 1 L which resulted in a bacteria concentration of 5.3 x 10⁹ CFU/ml. The activation solution was incubated at 23°C. After 8, 16, 24 and 38 hours incubation respectively, a sample of 1 ml of the activated bacteria solution was inoculated directly into 2.5 L experimental wine in a 5 L container resulting in an initial bacteria number of 2.1 x 10⁶ CFU/ml. The samples was named 1, 2, 3, and 4 respectively. Also included in the examination was the direct inoculation of the wine with freeze dried *Oenococcus oeni* strain DSM 15569 to a concentration of 2.1 x 10⁶ CFU/mL. The freeze dried strain was prepared as described for sample A in Example 2. The wine was kept at 20°C and followed by the determination of CFU/ml and malic acid concentration.

Figure 9 show the results from the 5 wines. The survival rates measured day 2 in the wines inoculated directly with freeze dried bacteria and sample 1, 2, 3, and 4 from the activated bacteria solution were 4%, 10%, 52%, 90% and 100% respectively. Clearly, the activated bacteria survived much better in the wine than the direct inoculated freeze dried bacteria and the survival rate in the wine for the activated bacteria increased with the incubation time in the activation solution. The malolactic activity in the wines clearly reflected the different survival rates. The wines with the highest survival rates also had the fastest malic acid degradations.

### Example 7.

### Examination of new dry activation composition containing commercially available freeze dried Oenococcus oeni strain.

A dry activation composition was produced as described in example 5 except for the bacteria strain where 15 g freeze dried product of the commercial culture Viniflora oenos from Chr. Hansen A/S, Denmark, was used. The product contain *Oenococcus oeni,* strain DSM 7008 and it is recommended by the producer for direct inoculation into wine at a concentration of 15 g per 2500 L wine.

The dry activation composition was re-hydrated by addition of water to a total of 1 L which resulted in a bacteria concentration of 1.2 x 10¹⁰ CFU/ml. The activation solution was incubated at 23°C and after 24 hours the number of bacteria in the activation solution was determined to be 1.1 x 10¹⁰ CFU/mL indicating that no bacteria growth had occurred. After the 24 hours a sample of the activated bacteria solution was inoculated into 2.5 L Chardonnay wine from California with 12.5 vol% ethanol, pH 3.3 and with 20 ppm SO₂ added at crush. The inoculation resulted in an initial bacteria concentration of 5 x 10⁶ CFU/ml in the wine. 2.5 I of the wine was also inoculated directly with the freeze dried product according to instruction of the manufacture which also resulted in an initial bacteria concentration of 5 x 10⁶ CFU/ml . The wine was kept at 24°C and followed by the determination of CFU/ml and malic acid concentration. Figure 10 shows the results from the examination from which it can be calculated, that the survival rate measured day two was 40% in the wine inoculated directly with freeze dried bacteria while it was 100% in the wine inoculated with bacteria from the activation solution. In the later the bacteria also started to grow without a lag phase and the malolactic fermentation was completed within 16 days while it took 20 days in the wine inoculated directly with freeze dried bacteria.

## Claims

1. An isolated and purified microbial organism, wherein said microbial organism is capable of fermenting malic acid to lactic acid,
and wherein said microbial organism when placed in a medium containing a predetermined amount of citric acid is only capable of degrading at the most 80% of said citric acid,
and wherein the microbial organism has at least one of the following characteristics, when said microbial organism in a frozen or freeze dried state is added directly into a fermented fruit juice:
i) a survival rate which is at least 1% after two days at 23°C in a fermented sterile fruit juice with a pH of less than 4 and comprising at least 12 vol% ethanol
ii) a survival rate which is at least 70% after two days at 17°C in a fermented sterile fruit juice with a pH of less than 4 comprising at least 13.9 vol% ethanol

2. The microbial organism according to claim 1, wherein said microbial organism is an *Oenococcus oeni* strain.

3. The microbial organism according to claim 1, wherein the characteristic is a survival rate which is at least 10% after two days at 23°C in a wine prepared by yeasting a sterile grape fruit juice without added sulphite, said wine having an ethanol content of 12.0 vol%, pH 3.4, below 5 g/L residual sugar, 3.3 g/L of malic acid, and 450 mg/L of citric acid.

4. The microbial organism according to claim 1, wherein the characteristic is a survival rate which is in the range of 70% to 100% after two days at 18°C in a wine prepared with 30 ppm SO₂ added before the alcoholic fermentation, said wine having an ethanol content of 13.8 vol%, pH 3.5, 1.3 g/L malic acid, and 340 mg/L of citric acid.

5. The microbial organism according to claim 1, wherein the characteristic is a survival rate which is at least 80% after two days at 17°C in a wine prepared without SO₂ added, said wine having an ethanol content of 13.9 vol%, pH 3.6, 1.7 g/L malic acid, and 320 mg/L of citric acid.

6. The microbial organism according to claim 1, wherein said microbial organism when placed in a liquid composition comprising a predetermined amount of malic acid is capable of degrading at least 90% of said malic acid.

7. The microbial organism according to claim 1, wherein said microbial organism is only capable of degrading at the most 50% of said citric acid.

8. The microbial organism according to claim 1, wherein said microbial organism reduces the citric acid content by less than 50% within 50 days, when added directly in a frozen or freeze dried state to a fermented fruit juice at a concentration of CFUs in the range of 1 x 10⁶ to 5 x 10⁷ per ml, wherein said fermented fruit juice is prepared by yeasting a sterile fruit juice without added sulphite resulting in a fermented fruit juice having an ethanol content of 12.0 vol%, pH 3.4, below 5 g/L residual sugar, 3.3 g/L of malic acid, and 450 mg/L of citric acid.

9. The microbial organism according to claim 1, wherein said organism is resistant to bacteriophages.

10. The microbial organism according to any of the preceding claims, wherein said organism retains its characteristics during propagation and concentration.

11. The microbial organism according to claim 1, wherein said organism is selected from the group consisting of strains deposited under the accession numbers DSM 15569, DSM 15570, and DSM 15571.

12. A method of preferentially degrading malic acid over citric acid in a liquid composition comprising malic acid and citric acid, said method comprising the steps of
i) Providing a liquid composition comprising malic acid and citric acid;
ii) Providing a microbial organism according to any of claims 1 to 11, wherein said microbial organism has been frozen or freeze dried,
iii) Adding said freeze dried or frozen microbial organism directly to said liquid composition
iv) incubating said liquid composition and said microbial organism under conditions which allow degradation of at least 70% of the malic acid,
v) thereby obtaining a final liquid composition comprising less than 30% of the initial malic acid and at least 20% of the initial citric acid.

13. The method according to claim 12, wherein the liquid composition is grape juice or fermented grape juice.

14. The method according to claim 12, wherein the liquid composition has a pH in the range of 2 to 5.

15. The method according to claim 12, wherein the liquid composition comprises in the range of 5 to 15 vol% ethanol.

16. The method according to claim 12, wherein the liquid composition comprises in the range of 1 to 10 g/L malic acid.

17. The method according to claim 12, wherein the liquid composition comprises in the range of 50 to 2000 mg/L citric acid.

18. The method according to claim 12, wherein the final liquid composition comprises at least 50% of the initial citric acid.

19. The method according to claim 12, wherein the finial liquid composition comprises less than 20% of the initial malic acid.

20. The method according to claim 12, wherein the microbial organism is added at a concentration of less than 5 x 10⁷ CFU per ml of the liquid composition.

21. The method according to claim 13, wherein the fermented grape juice is selected from the group consisting of red wines, white wines and sparkling wines.

22. The method according to claim 12, wherein step iv) comprises incubation for a longer period of time than required for completion of malolactic fermentation.

23. A method of inducing malolactic fermentation during wine production, comprising the steps of
i) Providing a grape juice or a fermented grape juice
ii) Providing a microbial organism according to any of claims 1 to 11,
iii) Incubating said grape juice or fermented grape juice with said microbial organism under conditions which allow degradation of malic acid,
iv) thereby inducing malolactic fermentation

24. The method according to claim 23, wherein said microbial organism in a frozen or freeze-dried state is added directly to said grape juice or a fermented grape juice.

25. The method according to claim 23, wherein the microbial organism is added at a concentration of less than 5 x 10⁷ CFU per ml of the grape juice or a fermented grape juice.

26. The method according to claim 23, wherein the grape juice or a fermented grape juice has a pH in the range of 2 to 5, such as 3 to 4.

27. The method according to claim 23, wherein the grape juice or a fermented grape juice comprises in the range of 5 to 15 vol% ethanol.

28. The method according to claim 23, wherein the grape juice or a fermented grape juice comprises in the range of 1 to 10 g/L.

29. The method according to claim 23, wherein the grape juice or a fermented grape juice comprises in the range of 50 to 2000 mg/L citric acid.

30. The method according to claim 23, wherein the wine is selected from the group consisting of red wines, white wines and sparkling wines.

31. A concentrate of microbial organisms comprising or consisting of the microbial organism according to any of claims 1 to 11, wherein said concentrate has a content of colony forming units being in the range of 10⁹ to 10¹² per g.

32. The concentrate according to claim 31, wherein said microbial organism has been propagated in an adaptation medium comprising at least 6% sugar

33. The concentrate according to claim 32, wherein said adaptation medium comprises at least 3% glucose and at least 3% fructose

34. The concentrate according to claim 32, wherein said microbial organism has been propagated in said adaptation medium for at least 12 hours.

35. A method of producing a microbial organism according to any of claims 1 to 11, wherein said method comprises the steps of
i) Providing a microbial organism resistant to a pH below 5 and an ethanol concentration of at least 8%,
ii) Subjecting said microbial organism to mutagenesis, thereby obtaining more than one different mutated microbial organism
iii) Selecting mutated microbial organisms capable of fermenting malic acid to lactic acid, wherein said microbial organism when placed in a medium containing a predetermined amount of citric acid is only capable of degrading at the most 80% of said citric acid, and wherein the microbial organism has at least one of the following characteristics, when said microbial organism in a frozen or freeze dried state is added directly into a fermented fruit juice:
a) a survival rate which is at least 1% after two days at 23°C in a fermented sterile fruit juice comprising at least 12 vol% ethanol;
b) a survival rate which is at least 70% after two days at 17°C in a fermented sterile fruit juice comprising at least 13.9 vol% ethanol

36. The method according to claim 35, wherein said microbial organism is resistant to pH 3.2.

37. The method according to claim 35, wherein said microbial organism is resistant to an ethanol concentration of 13 vol%.

38. A method of preparing a dried microbial organism capable of fermenting malic acid to lactic acid, which has reduced citric acid degrading activity and which is capable of survival after direct inoculation into fermented fruit juice, said method comprising the steps of
i) Providing a microbial organism microbial organism according to any of claims 1 to 11,
ii) Providing an adaptation medium comprising at least 6% sugar
iii) Propagating said microbial organism in said adaptation medium under conditions allowing growth of said microbial organism
iv) Harvesting said microbial organism
v) drying said microbial organism

39. The method according to claim 38, wherein said adaptation medium comprises at least 3% glucose and at least 3% fructose

40. The method according to claim 38, wherein said microbial organism is propagated in said adaptation medium for at least 12 hours.

## Patentansprüche

1. Isolierter und gereinigter mikrobieller Organismus, wobei besagter mikrobieller Organismus Apfelsäure zu Milchsäure fermentieren kann, und wobei besagter mikrobieller Organismus, wenn er in ein Medium eingegeben wird, das eine vorherbestimmte Menge an Zitronensäure enthält, nur fähig ist, höchstens 80% der Zitronensäure abzubauen,
und wobei der mikrobielle Organismus mindestens eines der folgenden Merkmale hat, wenn er in gefrorenem oder gefriergetrocknetem Zustand direkt in einen gegorenen Fruchtsaft eingegeben wird:
i) eine Überlebensrate, die nach zwei Tagen bei 23°C in einem gegorenen sterilen Fruchtsaft mit einem pH-Wert von weniger als 4 und mit mindestens 12 Vol% Ethanol mindestens 1% beträgt
ii) eine Überlebensrate, die nach zwei Tagen bei 17°C in einem gegorenen sterilen Fruchtsaft mit einem pH-Wert von weniger als 4 mit mindestens 13.9 Vol% Ethanol mindestens 70% beträgt

2. Mikrobieller Organismus nach Anspruch 1, wobei der mikrobielle Organismus ein *Oenococcus oeni-*Stamm ist.

3. Mikrobieller Organismus nach Anspruch 1, wobei das Merkmal eine Überlebensrate ist, die nach zwei Tagen bei 23°C in einem Wein mindestens 10% beträgt, der zubereitet wird, indem man einen sterilen Traubensaft ohne Zugabe von Sulfit fermentiert, wobei besagter Wein einen Ethanolgehalt von 12.0 Vol% hat, pH 3.4, weniger als 5 g/L Restzucker, 3.3 g/L Apfelsäure und 450 mg/L Zitronensäure.

4. Mikrobieller Organismus nach Anspruch 1, wobei das Merkmal eine Überlebensrate im Bereich von 70% bis 100% nach zwei Tagen bei 18°C in einem Wein ist, der mit 30 ppm SO₂ bereitet wird, vor der alkoholischen Gärung hinzugegeben, wobei besagter Wein einen Ethanolgehalt von 13.8 Vol% hat, pH 3.5, 1.3 g/L Apfelsäure und 340 mg/L Zitronensäure.

5. Mikrobieller Organismus nach Anspruch 1, wobei das Merkmal eine Überlebensrate von mindestens 80% nach zwei Tagen bei 17°C in einem Wein ist, der ohne SO₂-Zugabe bereitet wird, wobei besagter Wein einen Ethanolgehalt von 13.9 Vol% hat, pH 3.6, 1.7 g/L Apfelsäure, und 320 mg/L Zitronensäure.

6. Mikrobieller Organismus nach Anspruch 1, wobei besagter mikrobieller Organismus in einer Flüssigkeitszusammensetzung mit einer vorherbestimmten Menge an Apfelsäure mindestens 90% der Apfelsäure abbauen kann.

7. Mikrobieller Organismus nach Anspruch 1, wobei besagter mikrobieller Organismus nur fähig ist, höchstens 50% der Zitronensäure abzubauen.

8. Mikrobieller Organismus nach Anspruch 1, wobei besagter mikrobieller Organismus den Zitronensäurengehalt um weniger als 50% innerhalb von 50 Tagen verringert, wenn er in gefrorenem oder gefriergetrocknetem Zustand direkt zu einem gegorenen Fruchtsaft hinzugegeben wird, in einer CFU-Konzentration im Bereich von 1 x 10⁶ bis 5 x 10⁷ pro ml, wobei besagter gegorener Fruchtsaft zubereitet wird, indem man einen sterilen Fruchtsaft ohne Zugabe von Sulfit fermentiert, was zu einem gegorenen Fruchtsaft mit einem Ethanolgehalt von 12.0 Vol% führt, pH 3.4, weniger als 5 g/L Restzucker, 3.3 g/L Apfelsäure und 450 mg/L Zitronensäure.

9. Mikrobieller Organismus nach Anspruch 1, wobei besagter Organismus resistent gegen Bakteriophagen ist.

10. Mikrobieller Organismus nach einem beliebigen der vorherigen Patentansprüche, wobei besagter Organismus seine Merkmale während der Züchtung und Konzentrierung beibehält.

11. Mikrobieller Organismus nach Anspruch 1, wobei besagter Organismus aus der Gruppe von Stämmen ausgewählt ist, die unter den Zugangsnummem DSM 15569, DSM 15570 und DSM 15571 hinterlegt sind.

12. Verfahren zum vorzugsweisen Abbau von Apfelsäure über Zitronensäure in einer Flüssigkeitszusammensetzung mit Apfelsäure und Zitronensäure, mit folgenden Phasen:
i) Bereitstellung einer Flüssigkeitszusammensetzung mit Apfelsäure und Zitronensäure;
ii) Bereitstellung eines mikrobiellen Organismus nach einem beliebigen der Ansprüche 1 bis 11, wobei besagter mikrobieller Organismus gefroren oder gefriergetrocknet worden ist,
iii) Direktes Hinzufügen des gefriergetrockneten oder gefrorenen mikrobiellen Organismus zu besagter Flüssigkeitszusammensetzung
iv) Inkubieren der Flüssigkeitszusammensetzung und des mikrobiellen Organismus unter Bedingungen, die den Abbau von mindestens 70% der Apfelsäure gestatten,
v) so dass man eine End-Flüssigkeitszusammensetzung mit weniger als 30% der anfänglichen Apfelsäure und mindestens 20% der anfänglichen Zitronensäure erhält.

13. Verfahren nach Anspruch 12, wobei die Flüssigkeitszusammensetzung Traubensaft oder gegorener Traubensaft ist.

14. Verfahren nach Anspruch 12, wobei die Flüssigkeitszusammensetzung einen pH im Bereich von 2 bis 5 hat.

15. Verfahren nach Anspruch 12, wobei die Flüssigkeitszusammensetzung 5 bis 15 Vol% Ethanol umfasst.

16. Verfahren nach Anspruch 12, wobei die Flüssigkeitszusammensetzung 1 bis 10 g/L Apfelsäure umfasst.

17. Verfahren nach Anspruch 12, wobei die Flüssigkeitszusammensetzung 50 bis 2000 mg/L Zitronensäure umfasst.

18. Verfahren nach Anspruch 12, wobei die End-Flüssigkeitszusammensetzung mindestens 50% der anfänglichen Zitronensäure umfasst.

19. Verfahren nach Anspruch 12, wobei die End-Flüssigkeitszusammensetzung weniger als 20% der anfänglichen Apfelsäure umfasst.

20. Verfahren nach Anspruch 12, wobei der mikrobieller Organismus in einer Konzentration von weniger als 5 x 10⁷ CFU pro ml der Flüssigkeitszusammensetzung hinzugegeben wird.

21. Verfahren nach Anspruch 13, wobei der gegorene Traubensaft aus folgender Gruppe ausgewählt ist:
Rotweine, Weißweine und Schaumweine.

22. Verfahren nach Anspruch 12, bei dem die Phase iv) eine Inkubation für eine längere Zeitspanne umfasst, als für den Abschluss der malolaktischen Gärung erforderlich ist.

23. Verfahren zum Einleiten malolaktischer Gärung während der Weinproduktion, mit folgenden Phasen:
i) Bereitstellung eines Traubensafts oder eines gegorenen Traubensafts
ii) Bereitstellung eines mikrobiellen Organismus nach einem beliebigen der Ansprüche 1 bis 11,
iii) Inkubieren des Traubensafts oder gegorenen Traubensafts mit besagtem mikrobiellen Organismus unter Bedingungen, die den Apfelsäurenabbau gestatten,
iv) wodurch es zur malolaktischen Gärung kommt

24. Verfahren nach Anspruch 23, wobei besagter mikrobieller Organismus in gefrorenem oder gefriergetrocknetem Zustand direkt zu besagtem Traubensaft oder zu einem gegorenen Traubensaft hinzugegeben wird.

25. Verfahren nach Anspruch 23, wobei der mikrobielle Organismus in einer Konzentration von weniger als 5 x 10⁷ CFU pro ml des Traubensafts oder eines gegorenen Traubensafts hinzugegeben wird.

26. Verfahren nach Anspruch 23, wobei der Traubensaft oder ein gegorener Traubensaft einen pH-Wert im Bereich von 2 bis 5 hat, wie zum Beispiel 3 bis 4.

27. Verfahren nach Anspruch 23, wobei der Traubensaft oder ein gegorener Traubensaft 5 bis 15 Vol% Ethanol umfasst.

28. Verfahren nach Anspruch 23, wobei der Traubensaft oder ein gegorener Traubensaft 1 bis 10 g/L umfasst.

29. Verfahren nach Anspruch 23, wobei der Traubensaft oder ein gegorener Traubensaft 50 bis 2000 mg/L Zitronensäure umfasst.

30. Verfahren nach Anspruch 23, wobei der Wein aus folgender Gruppe ausgewählt ist: Rotweine, Weißweine und Schaumweine.

31. Konzentrat von mikrobiellen Organismen mit oder bestehend aus dem mikrobiellen Organismus nach einem beliebigen der Ansprüche 1 bis 11, wobei besagtes Konzentrat einen Gehalt an Koloniebildungseinheiten von 10⁹ bis 10¹² pro g hat.

32. Konzentrat nach Anspruch 31, wobei besagte mikrobieller Organismus in einem Anpassungsmedium mit mindestens 6% Zucker gezüchtet wurde.

33. Konzentrat nach Anspruch 32, wobei besagtes Anpassungsmedium mindestens 3% Traubenzucker umfasst und mindestens 3% Fructose.

34. Konzentrat nach Anspruch 32, wobei besagte mikrobieller Organismus in besagtem Anpassungsmedium mindestens 12 Stunden lang gezüchtet wurde.

35. Verfahren zur Herstellung eines mikrobiellen Organismus nach einem beliebigen der Ansprüche 1 bis ii, mit folgenden Phasen:
i) mit einem mikrobiellen Organismus, der resistent gegen einen pH-Wert unter 5 und eine Ethanolkonzentration von mindestens 8% ist,
ii) Mutagenese des mikrobiellen Organismus, so dass man mehr als einen verschiedenen mutierten mikrobiellen Organismus erhält
iii) Auswahl von mutierten mikrobiellen Organismen, die fähig sind, Apfelsäure zu Milchsäure zu fermentieren, wobei besagter mikrobieller Organismus, wenn er in ein Medium eingegeben wird, das eine vorherbestimmte Menge an Zitronensäure enthält, nur fähig ist, höchstens 80% der Zitronensäure abzubauen, und wobei der mikrobielle Organismus mindestens eines der folgenden Merkmale hat, wenn er in gefrorenem oder gefriergetrocknetem Zustand direkt in einen gegorenen Fruchtsaft eingegeben wird:
a) eine Überlebensrate von mindestens 1 % nach zwei Tagen bei 23°C in einem gegorenen sterilen Fruchtsaft mit mindestens 12 Vol% Ethanol;
b) eine Überlebensrate von mindestens 70% nach zwei Tagen bei 17°C in einem gegorenen sterilen Fruchtsaft mit mindestens 13.9 Vol% Ethanol

36. Verfahren nach Anspruch 35, wobei besagter mikrobielle Organismus resistent gegen pH 3.2 ist.

37. Verfahren nach Anspruch 35, wobei besagter mikrobielle Organismus resistent gegen eine Ethanolkonzentration von 13 Vol% ist.

38. Verfahren zur Herstellung eines getrockneten mikrobiellen Organismus, der fähig ist, Apfelsäure zu Milchsäure zu fermentieren, der verringerten Zitronensäureabbau hat und der nach direkter Inokulation in gegorenen Fruchtsaft überleben kann, mit folgenden Phasen:
i) Bereitstellung eines mikrobiellen Organismus nach einem beliebigen der Ansprüche 1 bis 11 sowie eines Anpassungsmediums mit mindestens 6% Zucker
ii) Vermehrung des mikrobiellen Organismus in besagtem Anpassungsmedium unter Bedingungen, die das Wachstum des mikrobiellen Organismus gestatten
iv) Ernte des mikrobiellen Organismus
v) Trocknen des mikrobiellen Organismus

39. Verfahren nach Anspruch 38, wobei besagtes Anpassungsmedium mindestens 3% Traubenzucker umfasst und mindestens 3% Fructose.

40. Verfahren nach Anspruch 38, wobei besagter mikrobieller Organismus in besagtem Anpassungsmedium mindestens 12 Stunden lang gezüchtet wird.

## Revendications

1. Organisme microbien isolé et purifié, dans lequel ledit organisme microbien est susceptible de faire fermenter de l'acide malique en acide lactique,
et dans lequel ledit organisme microbien quand celui-ci est placé dans un milieu contenant une quantité prédéterminée d'acide citrique est seulement susceptible de dégrader tout au plus 80% dudit acide citrique,
et dans lequel l'organisme microbien a au moins une des caractéristiques suivantes, lorsque ledit organisme microbien dans un état congelé ou lyophilisé est ajouté directement dans un jus de fruits fermenté :
i) un taux de survie qui est d'au moins 1 % après deux jours à 23°C dans un jus de fruits fermenté stérile avec un pH inférieur à 4 et comprenant au moins 12 % d'éthanol par volume
ii) un taux de survie qui est d'au moins 70% après deux jours à 17°C dans un jus de fruits fermenté stérile avec un pH inférieur à 4 comprenant au moins 13.9 % d'éthanol par volume

2. Organisme microbien selon la revendication 1, dans lequel ledit organisme microbien est une souche d'*oenococcus oeni*.

3. Organisme microbien selon la revendication 1, **caractérisé en ce que** le taux de survie est d'au moins 10% après deux jours à 23°C dans un vin préparé en fermentant un jus de raisin stérile sans sulfite ajouté, ledit vin ayant un contenu d'éthanol de 12.0 % par volume, pH 3.4, moins de 5 g/L de sucre résiduel, 3.3 g/L d'acide malique, et 450 mg/L d'acide citrique.

4. Organisme microbien selon la revendication 1, dans lequel la caractéristique est un taux de survie allant de 70% à 100% après deux jours à 18°C dans un vin préparé avec 30 ppm de SO₂ ajouté avant la fermentation alcoolique, ledit vin ayant un contenu d'éthanol de 13.8 % par volume, pH 3.5, 1.3 g/L d'acide malique, et 340 mg/L d'acide citrique.

5. Organisme microbien selon la revendication 1, dans lequel la caractéristique est un taux de survie qui est d'au moins 80% après deux jours à 17°C dans un vin préparé sans addition de SO₂ ledit vin ayant un contenu d'éthanol de 13.9 % par volume, pH 3.6, 1.7 g/L d'acide malique, et 320 mg/L d'acide citrique.

6. Organisme microbien selon la revendication 1, dans lequel ledit organisme microbien quand celui-ci est placé dans une composition liquide comprenant une quantité prédéterminée d'acide malique est susceptible de dégrader au moins 90% de dudit acide malique.

7. Organisme microbien selon la revendication 1, dans lequel ledit organisme microbien est seulement susceptible de dégrader tout au plus 50% dudit acide citrique.

8. Organisme microbien selon la revendication 1, dans lequel ledit organisme microbien réduit le contenu d'acide citrique de moins de 50% en 50 jours, lorsque celui-ci est ajouté directement dans un état congelé ou lyophilisé à un jus de fruits fermenté à une concentration de CFUs allant de 1 x 10⁶ jusqu'à 5 x 10⁷ par ml, dans lequel ledit jus de fruits fermenté est préparé en fermentant un jus de fruits stérile sans sulfite ajouté donnant lieu à un jus de fruits fermenté ayant un contenu d'éthanol de 12.0% par volume, pH 3.4, moins de 5 g/L de sucre résiduel, 3.3 g/L d'acide malique et 450 mg/L d'acide citrique.

9. Organisme microbien selon la revendication 1, dans lequel ledit organisme est résistant aux bactériophages.

10. Organisme microbien selon l'une quelconque des revendications précédentes, dans lequel ledit organisme retient ses caractéristiques pendant la propagation et la concentration.

11. Organisme microbien selon la revendication 1, dans lequel ledit organisme est sélectionné parmi le groupe composé de souches déposées sous les numéros d'entrée DSM 15569, DSM 15570 et DSM 15571.

12. Procédé de dégradation de préférence de l'acide malique sur l'acide citrique dans une composition liquide comprenant acide malique et acide citrique, ladite méthode comprenant les phases de
i) fournir une composition liquide comprenant acide malique et acide citrique;
ii) fournir un organisme microbien selon l'une quelconque des revendications 1 à 11, qui a été congelé ou lyophilisé ;
iii) ajouter ledit organisme microbien lyophilisé ou congelé directement à ladite composition liquide ;
iv) incuber ladite composition liquide et ledit organisme microbien à des conditions qui permettent la dégradation d'au moins 70% de l'acide malique ;
v) obtenir de cette manière une composition liquide finale comprenant moins de 30% de l'acide malique initial et au moins 20% de l'acide citrique initial.

13. Procédé selon la revendication 12, où la composition liquide est du jus de raisin ou du jus de raisin fermenté.

14. Procédé selon la revendication 12, où le pH de la composition liquide va de 2 à 5.

15. Procédé selon la revendication 12, où l'éthanol de la composition liquide est de 5 à 15 % par volume.

16. Procédé selon la revendication 12, où la composition liquide comprend de 1 à 10 g/L d'acide malique.

17. Procédé selon la revendication 12, où la composition liquide comprend de 50 à 2000 mg/L d'acide citrique.

18. Procédé selon la revendication 12, où la composition liquide finale comprend au moins 50% de l'acide citrique initial.

19. Procédé selon la revendication 12, où la composition liquide finale comprend moins de 20% de l'acide malique initial.

20. Procédé selon la revendication 12, où l'organisme microbien est ajouté à une concentration de moins de 5 x 10⁷ CFU par ml de la composition liquide.

21. Procédé selon la revendication 13, où le jus de raisin fermenté est sélectionné du groupe composé de vins rouges, vins blancs et vins mousseux.

22. Procédé selon la revendication 12, où la phase iv) comprend l'incubation sur une période plus longue que nécessaire pour l'achèvement de la fermentation malolactique.

23. Procédé pour induire la fermentation malolactique pendant la production de vin, comprenant les phases de
i) fournir un jus de raisin ou un jus de raisin fermenté ;
ii) fournir un organisme microbien selon l'une quelconque des revendications 1 à 11 ;
iii) incuber ledit jus de raisin ou jus de raisin fermenté avec ledit organisme microbien à des conditions qui permettent la dégradation de l'acide malique ;
iv) induire de cette manière la fermentation malolactique.

24. Procédé selon la revendication 23, où ledit organisme microbien dans un état congelé ou lyophilisé est ajouté directement audit jus de raisin ou à un jus de raisin fermenté.

25. Procédé selon la revendication 23, où l'organisme microbien est ajouté à une concentration de moins de 5 x 10⁷ CFU par ml du jus de raisin ou d'un jus de raisin fermenté.

26. Procédé selon la revendication 23, où le pH du jus de raisin ou du jus de raisin fermenté va de 2 à 5, par exemple de 3 à 4.

27. Procédé selon la revendication 23, où l'éthanol du jus de raisin ou du jus de raisin fermenté est de 5 à 15% par volume.

28. Procédé selon la revendication 23, où le jus de raisin ou un jus de raisin fermenté est de 1 à 10 g/L.

29. Procédé selon la revendication 23, où le jus de raisin ou un jus de raisin fermenté comprend de 50 à 2000 mg/L d'acide citrique.

30. Procédé selon la revendication 23, où le vin est sélectionné parmi le groupe composé de vins rouges, vins blancs et vins mousseux.

31. Concentré d'organismes microbiens comprenant ou composé de l'organisme microbien selon l'une quelconque des revendications 1 à 11, où ledit concentré a un contenu d'unités de formation de colonie dans la gamme de 10⁹ à 10¹² par g.

32. Concentré selon la revendication 31, où ledit organisme microbien s'est propagé dans un milieu d'adaptation comprenant au moins 6% de sucre.

33. Concentré selon la revendication 32, où ledit milieu d'adaptation comprend au moins 3% de glucose et au moins 3% de fructose.

34. Concentré selon la revendication 32, où ledit organisme microbien s'est propagé dans ledit milieu d'adaptation pendant au moins 12 heures.

35. Procédé pour produire un organisme microbien selon l'une quelconque des revendications 1 à 11, où ladite méthode comprend les phases de
i) fournir un organisme microbien résistant à un pH inférieur à 5 et une concentration d'éthanol d'au moins 8%,
ii) soumettre ledit organisme microbien à la mutagénèse, obtenant ainsi plus d'un organisme microbien muté différent
iii) sélectionner des organismes microbiens mutés susceptibles de faire fermenter de l'acide malique en acide lactique, où ledit organisme microbien, quand celui-ci est placé dans un milieu contenant une quantité prédéterminée d'acide citrique, est seulement susceptible de dégrader tout au plus 80% dudit acide citrique, et où l'organisme microbien a au moins une des caractéristiques suivantes, lorsque ledit organisme microbien dans un état congelé ou lyophilisé est ajouté directement dans un jus de fruits fermenté :
a) un taux de survie qui est d'au moins 1% après deux jours à 23°C dans un jus de fruits fermenté stérile comprenant au moins 12% d'éthanol par volume;
b) un taux de survie qui est au moins 70% après deux jours à 17°C dans un jus de fruits fermenté stérile comprenant au moins 13.9 % d'éthanol par volume

36. Procédé selon la revendication 35, où ledit organisme microbien est résistant à pH 3.2.

37. Procédé selon la revendication 35, où ledit organisme microbien est résistant à une concentration d'éthanol de 13 % par volume.

38. Procédé pour la préparation d'un organisme microbien séché susceptible de fermenter de l'acide malique en acide lactique, qui a une activité de dégradation d'acide citrique réduite et qui est susceptible de survivre après l'inoculation directe dans un jus de fruits fermenté, ladite méthode comprenant les phases de
i) fournir un organisme microbien selon l'une quelconque des revendications 1 à 11 ;
ii) fournir un milieu d'adaptation comprenant au moins 6% de sucre ;
iii) propager ledit organisme microbien dans ledit milieu d'adaptation à des conditions qui permettent la croissance dudit organisme microbien ;
iv) récolter ledit organisme microbien ;
v) sécher ledit organisme microbien.

39. Procédé selon la revendication 38, où ledit milieu d'adaptation comprend au moins 3% de glucose et au moins 3% de fructose.

40. Procédé selon la revendication 38, où ledit organisme microbien se propage dans ledit milieu d'adaptation pendant au moins 12 heures.
